(19) **Europäisches Patentamt / European Patent Office / Office européen des brevets**

(11) **EP 4 675 964 A1**

(12) **EUROPEAN PATENT APPLICATION**
published in accordance with Art. 153(4) EPC

(43) Date of publication:
**07.01.2026 Bulletin 2026/02**

(21) Application number: **24769962.2**

(22) Date of filing: **13.03.2024**

(51) International Patent Classification (IPC):
**H04L 5/00** (2006.01)

(52) Cooperative Patent Classification (CPC):
**H04L 5/00**

(86) International application number:
**PCT/CN2024/081426**

(87) International publication number:
**WO 2024/188271 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.03.2023 CN 202310286630**

(71) Applicant: HUAWEI TECHNOLOGIES CO., LTD.
**Shenzhen, Guangdong 518129 (CN)**

(72) Inventors:
• HU, Mengshi
**Shenzhen, Guangdong 518129 (CN)**
• GAN, Ming
**Shenzhen, Guangdong 518129 (CN)**
• MAO, Zhi
**Shenzhen, Guangdong 518129 (CN)**
• YU, Jian
**Shenzhen, Guangdong 518129 (CN)**

(74) Representative: **Maiwald GmbH**
**Engineering**
**Elisenhof**
**Elisenstrasse 3**
**80335 München (DE)**

(54) **COMMUNICATION METHOD AND COMMUNICATION APPARATUS**

(57)    This application relates to the communication field, and in particular, to a PPDU transmission method and a communication apparatus. The solutions may be applied to a WLAN system that supports a next-generation Wi-Fi protocol of IEEE 802.11ax, for example, 802.11 be, Wi-Fi 7, or EHT, or for another example, a next generation of 802. 1 1be, such as an 802.11 series protocol like Wi-Fi 8, and may be further applied to a UWB-based wireless personal area network system and a sensing system. In the method, a ratio of a spacing between subcarriers for transmitting a first part of a first PPDU to a spacing between subcarriers for transmitting a first part of a second PPDU is different from a ratio of a spacing between subcarriers for transmitting a second part of the first PPDU to a spacing between subcarriers for transmitting a second part of the second PPDU, and the first PPDU and the second PPDU are transmitted at a high frequency and a low frequency respectively. In this way, a high-frequency PPDU has better transmission performance.

200

First station — Second station

S210: Generate a first PPDU, where the first PPDU includes a first part and a second part

S220: Send the first part of the first PPDU by using subcarriers at a first subcarrier spacing, and send the second part of the first PPDU by using subcarriers at a second subcarrier spacing, where the first subcarrier spacing is x times a third subcarrier spacing, the second subcarrier spacing is y times a fourth subcarrier spacing, x is not equal to y, and x is not equal to 1

S230: Parse the first PPDU

FIG. 4

## Description

This application claims priority to Chinese Patent Application No. 202310286630.9, with the China National Intellectual Property Administration on March 15, 2023 and entitled "COMMUNICATION METHOD AND COMMUNICATION APPARATUS", which is incorporated herein by reference in its entirety.

## TECHNICAL FIELD

This application relates to the field of communication technologies, and more specifically, to a communication method and a communication apparatus.

## BACKGROUND

A wireless local area network (wireless local area network, WLAN) has experienced many generations in development, including low-frequency communication standards running below 7 GHz, such as 802.11a/b/g, 802.11n, 802.11ac, 802.11ax, and 802.11be, and further including high-frequency communication standards, such as 802.11ad and 802.11ay running near 60 GHz.

Currently, in WLAN low-frequency communication, a physical layer protocol data unit (physical layer protocol data unit, PPDU) may be transmitted by using an orthogonal frequency division multiplexing (orthogonal frequency division multiplexing, OFDM) technology. In high-frequency communication, a preamble part of a PPDU is modulated and sent in a single-carrier (single carrier, SC) mode, and only a field after the preamble is transmitted by using the OFDM technology. This achieves advantages of a low peak-to-average power ratio (peak-to-average power ratio, PAPR), phase noise suppression, and the like.

However, a transmission mode in which both SC and OFDM are used in a PPDU also has some disadvantages: For example, modulation schemes in the PPDU are not unified or are incompatible with a format of a low-frequency PPDU. This is not conducive to PPDU receiving and sending by a device.

## SUMMARY

This application provides a communication method and a communication apparatus, to enable all PPDUs in high-frequency communication to be transmitted in an OFDM mode, to facilitate PPDU receiving and sending by a device. In addition, different requirements of different parts of a high-frequency PPDU for a subcarrier spacing can be met, to achieve better transmission performance.

According to a first aspect, a communication method is provided. The method may be performed by a first station, or may be performed by a component (for example, a chip, a circuit, or a module) configured in the first station. This is not limited in this application.

The method includes: generating a first physical layer protocol data unit (physical layer protocol data unit, PPDU), where the first PPDU includes a first part and a second part, and the first part of the first PPDU is located before the second part of the first PPDU in a frame format; and sending the first part of the first PPDU by using subcarriers at a first subcarrier spacing, and sending the second part of the first PPDU by using subcarriers at a second subcarrier spacing.

The first subcarrier spacing is x times a third subcarrier spacing. The second subcarrier spacing is y times a fourth subcarrier spacing. The third subcarrier spacing is a subcarrier spacing between subcarriers for transmitting a first part of a second PPDU. The fourth subcarrier spacing is a subcarrier spacing between subcarriers for transmitting a second part of the second PPDU. The first part of the second PPDU is located before the second part of the second PPDU in a frame format. x is not equal to y, and x is not equal to 1.

The first PPDU is transmitted on a first frequency band. The second PPDU is transmitted on a second frequency band. A lowest frequency of the first frequency band is greater than or equal to a highest frequency of the second frequency band.

According to the foregoing solution, both a subcarrier spacing between subcarriers for transmitting the first part of the first PPDU and a subcarrier spacing between subcarriers for transmitting the second part of the first PPDU are defined. Therefore, both the first part and the second part of the first PPDU may be transmitted in an OFDM mode, to avoid use of a hybrid transmission mode of SC and OFDM. This facilitates PPDU receiving and sending by a device.

In addition, different requirements of different parts of the first PPDU for a subcarrier spacing can be met, to achieve better transmission performance.

With reference to the first aspect, in some implementations of the first aspect, the first part of the first PPDU is repeatedly sent in a basic channel element of the first frequency band.

Optionally, that the first part of the first PPDU is repeatedly sent in the basic channel element of the first frequency band includes: A first part, multiplied by a coefficient, of the first PPDU is sent in the basic channel element.

For example, a repeatedly sent sequence may be obtained by multiplying the 1st sent sequence by a coefficient, for example, +1, -1, j, or -j. This can implement phase rotation and reduce a peak-to-average power ratio (peak-to-average power ratio, PAPR, peak-to-average ratio for short).

According to the foregoing solution, frequency domain widths of different parts of the first PPDU can be the same through repeated sending. This facilitates PPDU receiving and sending by a device.

With reference to the first aspect, in some implementations of the first aspect, a frequency domain width of the second part of the first PPDU is supplemented to be the same as a frequency domain width of the first part of the first PPDU.

With reference to the first aspect, in some implementations of the first aspect, the first part of the second PPDU is used to correct a carrier frequency offset.

With reference to the first aspect, in some implementations of the first aspect, the first part of the first PPDU is used to correct a carrier frequency offset.

In an example, the first part of the first PPDU includes a legacy-short training field, and the legacy-short training field is used to correct the carrier frequency offset.

According to the foregoing solution, a high-frequency PPDU may be designed based on an existing low-frequency PPDU. This is simple and efficient.

Optionally, a quantity of symbols occupied by the legacy-short training field in the first PPDU in time domain is greater than a quantity of symbols occupied by a legacy-short training field in the second PPDU in time domain.

In still another example, the first part of the first PPDU includes a new field, and the new field is used to correct the carrier frequency offset.

Optionally, the second part of the first PPDU includes a legacy-short training field.

Optionally, a quantity of symbols occupied by the legacy-short training field in the first PPDU in time domain is less than or equal to a quantity of symbols occupied by a legacy-short training field in the second PPDU in time domain.

With reference to the first aspect, in some implementations of the first aspect, a frequency domain sequence of the legacy-short training field in the first PPDU is different from a frequency domain sequence of the legacy-short training field in the second PPDU.

With reference to the first aspect, in some implementations of the first aspect, the second part of the first PPDU includes a data field.

With reference to the first aspect, in some implementations of the first aspect, the second part of the second PPDU includes a data field.

For example, the lowest frequency of the first frequency band is greater than or equal to 45 GHz.

For example, the highest frequency of the second frequency band is less than or equal to 7 GHz.

With reference to the first aspect, in some implementations of the first aspect, x meets the following condition:

$$x \geq \frac{4 * f_a * e}{\Delta f},$$

where

$f_a$ is a highest frequency of the first frequency band, $e$ is a maximum error allowed for a device operating on the first frequency band, and $\Delta f$ is the third subcarrier spacing.

With reference to the first aspect, in some implementations of the first aspect, the method may further include: sending a first part of a third PPDU by using subcarriers at the first subcarrier spacing, and sending a second part of the third PPDU by using subcarriers at a fifth subcarrier spacing.

The first subcarrier spacing is x times the third subcarrier spacing, the fifth subcarrier spacing is z times the fourth subcarrier spacing, and y is not equal to z.

The third PPDU is transmitted on the first frequency band.

In other words, a plurality of PPDUs with different subcarrier spacings may be transmitted on the first frequency band.

Optionally, a relationship between x and z is not limited in this application, and x and z may be equal or not equal.

With reference to the first aspect, in some implementations of the first aspect, the method may further include: sending first information, where the first information indicates values of x and y.

With reference to the first aspect, in some implementations of the first aspect, the method may further include: sending second information, where the second information indicates values of x and z.

Specifically, capability negotiation may be performed between a transmit-end device and a receive-end device, to determine a format of a high-frequency PPDU, or negotiate upon a to-be-used format of a high-frequency PPDU.

According to a second aspect, a communication method is provided. The method may be performed by a second station, or may be performed by a component (for example, a chip, a circuit, or a module) configured in the second station. This is not limited in this application.

The method includes: receiving a first part of a first PPDU by using subcarriers at a first subcarrier spacing, and receiving a second part of the first PPDU by using subcarriers at a second subcarrier spacing; and parsing the first PPDU.

The first subcarrier spacing is x times a third subcarrier spacing. The second subcarrier spacing is y times a fourth subcarrier spacing. The third subcarrier spacing is a subcarrier spacing between subcarriers for transmitting a first part of a second PPDU. The fourth subcarrier spacing is a subcarrier spacing between subcarriers for transmitting a second part of the second PPDU. The first part of the first PPDU is located before the second part of the first PPDU in a frame format. The first part of the second PPDU is located before the second part of the second PPDU in a frame format. x is not equal to y, and x is not equal to 1.

The first PPDU is transmitted on a first frequency band. The second PPDU is transmitted on a second frequency band. A lowest frequency of the first frequency band is greater than or equal to a highest frequency of the second frequency band.

With reference to the second aspect, in some implementations of the second aspect, the first part of the first PPDU is repeatedly sent in a basic channel element of the first frequency band.

Optionally, that the first part of the first PPDU is repeatedly sent in the basic channel element of the first frequency band includes: A first part, multiplied by a coefficient, of the first PPDU is sent in the basic channel element.

With reference to the second aspect, in some implementations of the second aspect, a frequency domain width of the second part of the first PPDU is supplemented to be the same as a frequency domain width of the first part of the first PPDU.

With reference to the second aspect, in some implementations of the second aspect, the first part of the second PPDU is used to correct a carrier frequency offset.

With reference to the second aspect, in some implementations of the second aspect, the first part of the first PPDU is used to correct a carrier frequency offset.

In an example, the first part of the first PPDU includes a legacy-short training field, and the legacy-short training field is used to correct the carrier frequency offset.

Optionally, a quantity of symbols occupied by the legacy-short training field in the first PPDU in time domain is greater than a quantity of symbols occupied by a legacy-short training field in the second PPDU in time domain.

In still another example, the first part of the first PPDU includes a new field, and the new field is used to correct the carrier frequency offset.

Optionally, the second part of the first PPDU includes a legacy-short training field.

Optionally, a quantity of symbols occupied by the legacy-short training field in the first PPDU in time domain is less than or equal to a quantity of symbols occupied by a legacy-short training field in the second PPDU in time domain.

With reference to the second aspect, in some implementations of the second aspect, a frequency domain sequence of the legacy-short training field in the first PPDU is different from a frequency domain sequence of the legacy-short training field in the second PPDU.

With reference to the second aspect, in some implementations of the second aspect, the second part of the first PPDU includes a data field.

With reference to the second aspect, in some implementations of the second aspect, the second part of the second PPDU includes a data field.

For example, the lowest frequency of the first frequency band is greater than or equal to 45 GHz.

For example, the highest frequency of the second frequency band is less than or equal to 7 GHz.

With reference to the second aspect, in some implementations of the second aspect, x meets the following condition:

$$x \geq \frac{4 * f_a * e}{\Delta f},$$

where
$f_a$ is a highest frequency of the first frequency band, $e$ is a maximum error allowed for a device operating on the first frequency band, and $\Delta f$ is the third subcarrier spacing.

With reference to the second aspect, in some implementations of the second aspect, the method may further include: receiving a first part of a third PPDU by using subcarriers at the first subcarrier spacing, and receiving a second part of the third PPDU by using subcarriers at a fifth subcarrier spacing.

The first subcarrier spacing is x times the third subcarrier spacing, the fifth subcarrier spacing is z times the fourth subcarrier spacing, and y is not equal to z.

The third PPDU is transmitted on the first frequency band.

In other words, a plurality of PPDUs with different subcarrier spacings may be transmitted on the first frequency band.

Optionally, a relationship between x and z is not limited in this application, and x and z may be equal or not equal.

With reference to the second aspect, in some implementations of the second aspect, the method may further include: receiving first information, where the first information indicates values of x and y.

With reference to the second aspect, in some implementations of the second aspect, the method may further include: receiving second information, where the second information indicates values of x and z.

Specifically, capability negotiation may be performed between a transmit-end device and a receive-end device, to determine a format of a high-frequency PPDU, or negotiate upon a to-be-used format of a high-frequency PPDU.

It should be understood that, for beneficial effect of the second aspect and the implementations of the second aspect, reference may be made to the beneficial effect of the first aspect and the implementations of the first aspect. Details are not described herein again.

According to a third aspect, a communication method is provided. The method may be performed by a first station, or may be performed by a component (for example, a chip, a circuit, or a module) configured in the first station. This is not limited in this application.

The method includes: generating a first PPDU, where a quantity of symbols occupied by a first field in the first PPDU in time domain is greater than a quantity of symbols occupied by a second field in a second PPDU in time domain, the first PPDU includes the first field, the first field is used to correct a carrier frequency offset, the second PPDU includes the second field, and the second field is used to correct a carrier frequency offset; and sending the first PPDU.

The first PPDU is transmitted on a first frequency band, and the second PPDU is transmitted on a second frequency band.

For example, a lowest frequency of the first frequency band is greater than or equal to 45 GHz.

For example, a highest frequency of the second frequency band is less than or equal to 7 GHz.

For example, the first field is a legacy-short training field.

For example, the second field is a legacy-short training field.

According to the foregoing solution, more symbols of the first field are transmitted in time domain, so that a receive end can have more symbols to correct a carrier frequency offset, to improve offset correction accuracy.

According to a fourth aspect, a communication method is provided. The method may be performed by a second station, or may be performed by a component (for example, a chip, a circuit, or a module) configured in the second station. This is not limited in this application.

The method includes: receiving a first PPDU, where a quantity of symbols occupied by a first field in the first PPDU in time domain is greater than a quantity of symbols occupied by a second field in a second PPDU in time domain, the first PPDU includes the first field, the first field is used to correct a carrier frequency offset, the second PPDU includes the second field, and the second field is used to correct a carrier frequency offset; and parsing the first PPDU.

The first PPDU is transmitted on a first frequency band, and the second PPDU is transmitted on a second frequency band.

For example, a lowest frequency of the first frequency band is greater than or equal to 45 GHz.

For example, a highest frequency of the second frequency band is less than or equal to 7 GHz.

For example, the first field is a legacy-short training field.

For example, the second field is a legacy-short training field.

According to the foregoing solution, more symbols of the first field are transmitted in time domain, so that a receive end can have more symbols to correct a carrier frequency offset, to improve offset correction accuracy.

According to a fifth aspect, a communication apparatus is provided. The apparatus may be a first station, or may be a component (for example, a chip, a circuit, or a module) configured in the first station. This is not limited in this application.

The apparatus includes: a processing unit, configured to generate a first PPDU, where the first PPDU includes a first part and a second part, and the first part of the first PPDU is located before the second part of the first PPDU in a frame format; and a transceiver unit, configured to send the first part of the first PPDU by using subcarriers at a first subcarrier spacing, and send the second part of the first PPDU by using subcarriers at a second subcarrier spacing.

The first subcarrier spacing is x times a third subcarrier spacing. The second subcarrier spacing is y times a fourth subcarrier spacing. The third subcarrier spacing is a subcarrier spacing between subcarriers for transmitting a first part of a second PPDU. The fourth subcarrier spacing is a subcarrier spacing between subcarriers for transmitting a second part of the second PPDU. The first part of the second PPDU is located before the second part of the second PPDU in a frame format. x is not equal to y, and x is not equal to 1.

The first PPDU is transmitted on a first frequency band. The second PPDU is transmitted on a second frequency band. A lowest frequency of the first frequency band is greater than or equal to a highest frequency of the second frequency band.

With reference to the fifth aspect, in some implementations of the fifth aspect, the first part of the first PPDU is repeatedly sent in a basic channel element of the first frequency band.

Optionally, that the first part of the first PPDU is repeatedly sent in the basic channel element of the first frequency band includes: A first part, multiplied by a coefficient, of the first PPDU is sent in the basic channel element.

With reference to the fifth aspect, in some implementations of the fifth aspect, a frequency domain width of the second part of the first PPDU is supplemented to be the same as a frequency domain width of the first part of the first PPDU.

With reference to the fifth aspect, in some implementations of the fifth aspect, the first part of the second PPDU is used to correct a carrier frequency offset.

With reference to the fifth aspect, in some implementations of the fifth aspect, the first part of the first PPDU is used to correct a carrier frequency offset.

In an example, the first part of the first PPDU includes a legacy-short training field, and the legacy-short training field is used to correct the carrier frequency offset.

Optionally, a quantity of symbols occupied by the legacy-short training field in the first PPDU in time domain is greater than a quantity of symbols occupied by a legacy-short training field in the second PPDU in time domain.

In still another example, the first part of the first PPDU includes a new field, and the new field is used to correct the carrier frequency offset.

Optionally, the second part of the first PPDU includes a legacy-short training field.

Optionally, a quantity of symbols occupied by the legacy-short training field in the first PPDU in time domain is less than or equal to a quantity of symbols occupied by a legacy-short training field in the second PPDU in time domain.

With reference to the fifth aspect, in some implementations of the fifth aspect, a frequency domain sequence of the legacy-short training field in the first PPDU is different from a frequency domain sequence of the legacy-short training field in the second PPDU.

With reference to the fifth aspect, in some implementations of the fifth aspect, the second part of the first PPDU includes a data field.

With reference to the fifth aspect, in some implementations of the fifth aspect, the second part of the second PPDU includes a data field.

For example, the lowest frequency of the first frequency band is greater than or equal to 45 GHz.

For example, the highest frequency of the second frequency band is less than or equal to 7 GHz.

With reference to the fifth aspect, in some implementations of the fifth aspect, x meets the following condition:

$$x \geq \frac{4 * f_a * e}{\Delta f},$$

where

$f_a$ is a highest frequency of the first frequency band, $e$ is a maximum error allowed for a device operating on the first frequency band, and $\Delta f$ is the third subcarrier spacing.

With reference to the fifth aspect, in some implementations of the fifth aspect, the transceiver unit is further configured to send a first part of a third PPDU by using subcarriers at the first subcarrier spacing, and send a second part of the third PPDU by using subcarriers at a fifth subcarrier spacing.

The first subcarrier spacing is x times the third subcarrier spacing, the fifth subcarrier spacing is z times the fourth subcarrier spacing, and y is not equal to z.

The third PPDU is transmitted on the first frequency band.

With reference to the fifth aspect, in some implementations of the fifth aspect, the transceiver unit is further configured to send first information, where the first information indicates values of x and y.

With reference to the fifth aspect, in some implementations of the fifth aspect, the transceiver unit is further configured to send second information, where the second information indicates values of x and z.

According to a sixth aspect, a communication apparatus is provided. The apparatus may be a second station, or may be a component (for example, a chip, a circuit, or a module) configured in the second station. This is not limited in this application.

The apparatus includes: a transceiver unit, configured to receive a first part of a first physical layer protocol data unit PPDU by using subcarriers at a first subcarrier spacing, and receive a second part of the first PPDU by using subcarriers at a second subcarrier spacing; and a processing unit, configured to parse the first PPDU.

The first subcarrier spacing is x times a third subcarrier spacing. The second subcarrier spacing is y times a fourth subcarrier spacing. The third subcarrier spacing is a subcarrier spacing between subcarriers for transmitting a first part of a second PPDU. The fourth subcarrier spacing is a subcarrier spacing between subcarriers for transmitting a second part of the second PPDU. The first part of the second PPDU is located before the second part of the second PPDU in a frame format. x is not equal to y, and x is not equal to 1.

The first PPDU is transmitted on a first frequency band. The second PPDU is transmitted on a second frequency band. A lowest frequency of the first frequency band is greater than or equal to a highest frequency of the second frequency band.

With reference to the sixth aspect, in some implementations of the sixth aspect, the first part of the first PPDU is repeatedly sent in a basic channel element of the first frequency band.

Optionally, that the first part of the first PPDU is repeatedly sent in the basic channel element of the first frequency band includes: A first part, multiplied by a coefficient, of the first PPDU is sent in the basic channel element.

With reference to the sixth aspect, in some implementations of the sixth aspect, a frequency domain width of the second part of the first PPDU in the basic channel element of the first frequency band is supplemented to be the same as a frequency domain width of the first part of the first PPDU.

With reference to the sixth aspect, in some implementations of the sixth aspect, the first part of the second PPDU is used to correct a carrier frequency offset.

With reference to the sixth aspect, in some implementations of the sixth aspect, the first part of the first PPDU is used to correct a carrier frequency offset.

In an example, the first part of the first PPDU includes a legacy-short training field, and the legacy-short training field is used to correct the carrier frequency offset.

Optionally, a quantity of symbols occupied by the legacy-short training field in the first PPDU in time domain is greater than a quantity of symbols occupied by a legacy-short training field in the second PPDU in time domain.

In still another example, the first part of the first PPDU includes a new field, and the new field is used to correct the carrier frequency offset.

Optionally, the second part of the first PPDU includes a legacy-short training field.

Optionally, a quantity of symbols occupied by the legacy-short training field in the first PPDU in time domain is less than or equal to a quantity of symbols occupied by a legacy-short training field in the second PPDU in time domain.

With reference to the sixth aspect, in some implementations of the sixth aspect, a frequency domain sequence of the legacy-short training field in the first PPDU is different from a frequency domain sequence of the legacy-short training field in the second PPDU.

With reference to the sixth aspect, in some implementations of the sixth aspect, the second part of the first PPDU includes a data field.

With reference to the sixth aspect, in some implementations of the sixth aspect, the second part of the second PPDU includes a data field.

For example, the lowest frequency of the first frequency band is greater than or equal to 45 GHz.

For example, the highest frequency of the second frequency band is less than or equal to 7 GHz.

With reference to the sixth aspect, in some implementations of the sixth aspect, x meets the following condition:

$$x \geq \frac{4 * f_a * e}{\Delta f},$$

where

$f_a$ is a highest frequency of the first frequency band, $e$ is a maximum error allowed for a device operating on the first frequency band, and $\Delta f$ is the third subcarrier spacing.

With reference to the sixth aspect, in some implementations of the sixth aspect, the transceiver unit is further configured to receive a first part of a third PPDU by using subcarriers at the first subcarrier spacing, and receive a second part of the third PPDU by using subcarriers at a fifth subcarrier spacing.

The first subcarrier spacing is x times the third subcarrier spacing, the fifth subcarrier spacing is z times the fourth subcarrier spacing, and y is not equal to z.

The third PPDU is transmitted on the first frequency band.

With reference to the sixth aspect, in some implementations of the sixth aspect, the transceiver unit is further configured to receive first information, where the first information indicates values of x and y.

With reference to the sixth aspect, in some implementations of the sixth aspect, the transceiver unit is further configured to receive second information, where the second information indicates values of x and z.

According to a seventh aspect, a communication apparatus is provided. The apparatus may be a first station, or may be a component (for example, a chip, a circuit, or a module) configured in the first station. This is not limited in this application.

The apparatus includes: a processing unit, configured to generate a first PPDU, where a quantity of symbols occupied by a first field in the first PPDU in time domain is greater than a quantity of symbols occupied by a second field in a second PPDU in time domain, the first PPDU includes the first field, the first field is used to correct a carrier frequency offset, the second PPDU includes the second field, and the second field is used to correct a carrier frequency offset; and a transceiver unit, configured to send the first PPDU.

The first PPDU is transmitted on a first frequency band, and the second PPDU is transmitted on a second frequency band.

For example, a lowest frequency of the first frequency band is greater than or equal to 45 GHz.

For example, a highest frequency of the second frequency band is less than or equal to 7 GHz.

According to an eighth aspect, a communication apparatus is provided. The apparatus may be a second station, or may be a component (for example, a chip, a circuit, or a module) configured in the second station. This is not limited in this application.

The apparatus includes: a transceiver unit, configured to receive a first PPDU, where a quantity of symbols occupied by a first field in the first PPDU in time domain is greater than a quantity of symbols occupied by a second field in a second PPDU in time domain, the first PPDU includes the first field, the first field is used to correct a carrier frequency offset, the second PPDU includes the second field, and the second field is used to correct a carrier frequency offset; and a processing unit, configured to parse the first PPDU.

The first PPDU is transmitted on a first frequency band, and the second PPDU is transmitted on a second frequency band.

For example, a lowest frequency of the first frequency band is greater than or equal to 45 GHz.

For example, a highest frequency of the second frequency band is less than or equal to 7 GHz.

According to a ninth aspect, a communication apparatus is provided, and includes a processor, configured to invoke a computer program stored in a memory and run the computer program, and control a transceiver to receive or send a signal, to enable the communication apparatus to perform the method according to any one of the first aspect to the fourth aspect or any one of the possible implementations of these aspects. Optionally, the communication apparatus may further include the memory, configured to store the computer program. The communication apparatus may further include the transceiver.

According to a tenth aspect, a communication apparatus is provided, and includes a processor. The processor is configured to process data and/or information, to enable the method according to any one of the first aspect to the fourth aspect or any one of the possible implementations of these aspects to be performed. Optionally, the communication apparatus may further include a communication interface. The communication interface is configured to receive data and/or information, and transmit the received data and/or information to the processor. Optionally, the communication interface is further configured to output data and/or information processed by the processor.

According to an eleventh aspect, a chip is provided, and includes a processor. The processor is configured to run a program or instructions, to enable the chip to perform the method according to any one of the first aspect to the fourth aspect or any one of the possible implementations of these aspects. Optionally, the chip may further include a memory, and the memory is configured to store the program or the instructions. Optionally, the chip may further include a transceiver.

According to a twelfth aspect, a computer-readable storage medium is provided. The computer-readable storage medium stores computer instructions. The computer instructions are used to implement the method according to any one of the first aspect to the fourth aspect or any one of the possible implementations of these aspects.

According to a thirteenth aspect, a computer program product is provided. The computer program product includes computer program code. The computer program code is used to implement the method according to any one of the first aspect to the fourth aspect or any one of the possible implementations of any one of these aspects.

According to a fourteenth aspect, a wireless communication system is provided, and includes the apparatus according to the fifth aspect and the apparatus according to the sixth aspect, or includes the apparatus according to the seventh aspect and the apparatus according to the eighth aspect.

## BRIEF DESCRIPTION OF DRAWINGS

FIG. 1 is a diagram of an application scenario to which embodiments of this application are applicable;

FIG. 2 shows a communication apparatus according to this application;

FIG. 3 shows PPDU formats in several low-frequency communication protocols;

FIG. 4 is a schematic flowchart of a communication method 200 according to an embodiment of this application;

FIG. 5 is a diagram of a format of a first PPDU and a format of a second PPDU according to an embodiment of this application;

FIG. 6 is another diagram of a format of a first PPDU and a format of a second PPDU according to an embodiment of this application;

FIG. 7 is a schematic flowchart of a communication method 300 according to an embodiment of this application;

FIG. 8 is a diagram of a communication apparatus according to an embodiment of this application;

FIG. 9 is a diagram of another structure of a communication apparatus according to an embodiment of this application;

FIG. 10 is a diagram of another structure of a communication apparatus according to an embodiment of this application; and

FIG. 11 is a diagram of another structure of a communication apparatus according to an embodiment of this application.

## DESCRIPTION OF EMBODIMENTS

The following describes technical solutions of this application with reference to the accompanying drawings.

The technical solutions provided in embodiments of this application are applicable to a wireless local area network (wireless local area network, WLAN) scenario, for example, support related institute of electrical and electronics engineers (institute of electrical and electronics engineers, IEEE) 802.11 standards, such as the 802.11a/b/g standard, the 802.11n standard, the 802.11ac standard, the 802.11ax standard, and a next-generation Wi-Fi protocol of IEEE 802.11ax, for example, 802.11be, Wi-Fi 7, extremely high throughput (extremely high throughput, EHT), 802.11ad, 802.11ay, or 802.11bf, or for another example, a next generation of 802.11be, like Wi-Fi 8; may be further applied to an ultra-wideband (ultra-wideband, UWB)-based wireless personal area network system, for example, 802.15 series standards; and may be further applied to a sensing (sensing) system, for example, 802.11bf series standards. The 802.11n standard is referred to as high throughput (high throughput, HT), the 802.11ac standard is referred to as a very high throughput (very high throughput, VHT) standard, the 802.11ax standard is referred to as a high efficiency (high efficiency, HE) standard, and the 802.11be standard is referred to as an extremely high throughput (extremely high throughput, EHT) standard. 802.11bf includes two major categories of standards: a low-frequency (for example, sub-7 GHz) standard and a high-frequency (for example, 60 GHz) standard. An implementation of sub-7 GHz mainly depends on 802.11ac, 802.11ax, 802.11be, and a next-generation standard. An implementation of 60 GHz mainly depends on 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

In embodiments of this application, an example in which a WLAN network, especially a network to which an IEEE 802.11 system standard is applied, is deployed is used for description. However, it is easily understood by a person skilled in the art that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or to be developed in the future. Therefore, regardless of a used coverage area and a used wireless access protocol, various aspects provided in embodiments of this application are applicable to any suitable wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a fifth-generation (5th generation, 5G) system or a new radio (new radio, NR) system, a future sixth-generation (6th generation, 6G) system, an internet of things (internet of things, IoT) network, or a vehicle-to-everything (vehicle-to-x, V2X) system.

The foregoing communication systems to which this application is applicable are merely examples for description, and communication systems to which this application is applicable are not limited thereto. This is uniformly described herein, and details are not described below again.

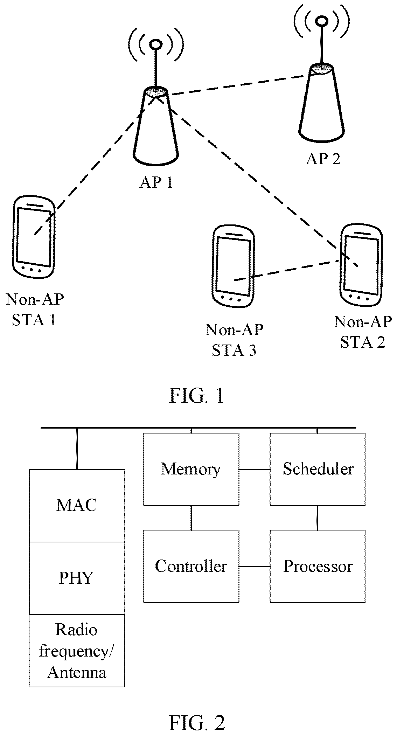

FIG. 1 is a diagram of an application scenario to which embodiments of this application are applicable. As shown in FIG. 1, a communication method provided in this application is applicable to data communication between stations (station, STA). The station may be an access point (access point, AP) station, or may be a non-access point station (non-access point station, non-AP STA). The access point station and the non-access point station are respectively referred to as an AP and a non-AP station for short. Specifically, the solutions of this application are applicable to data communication between an AP and one or more non-AP stations (for example, data communication between an AP 1 and a non-AP STA 1 and a non-AP STA 2), and are also applicable to data communication between APs (for example, data communication between the AP 1 and an AP 2) and data communication between non-AP STAs (for example, data communication between the non-AP STA 2 and a non-AP STA 3).

The access point may be a node through which a terminal (for example, a mobile phone) accesses a wired (or wireless) network, and is mainly deployed at home, in a building, or on a campus, with a typical coverage radius ranging from tens of meters to more than 100 meters, or certainly, may be deployed outdoors. The access point is equivalent to a bridge that connects a wired network and a wireless network, and is mainly intended to connect wireless network clients together and then connect the wireless network to Ethernet.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a 6G network, a network device in a public land mobile network (public land mobile network, PLMN), or the like. This is not limited in embodiments of this application. The access point may be a device that supports a Wi-Fi standard. For example, the access point may alternatively support one or more of the following IEEE 802.11 series standards: 802.11a, 802.11b, 802.11g, 802.11n, 802.11ac, 802.11ax, 802.11be, 802.11ad, and 802.11ay.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, an internet of things device, a wearable device, a terminal device in a 5G network, a terminal device in a 6G network, a terminal device in a PLMN, or the like. This is not limited in embodiments of this application. The non-AP station may be a device that supports a WLAN standard. For example, the non-AP station may support one or more of the following IEEE 802.11 series standards: 802.11a, 802.11b, 802.11g, 802.11n, 802.11ac, 802.11ax, 802.11be, 802.11ad, and 802.11ay.

For example, the non-AP station may be a mobile phone, a tablet computer, a set-top box, a smart television, a smart wearable device, a vehicle-mounted communication device, a computer, an internet of things (internet of things, IoT) node, a sensor, a smart home device such as a smart camera, a smart remote control, or a smart water/electricity meter, or a sensor in a smart city.

The AP or the non-AP station may include a transmitter, a receiver, a memory, a processor, and the like. The transmitter and the receiver are respectively configured to send and receive packet structures. The memory is configured to store signaling information, store a preset value that is pre-agreed-upon, and the like. The processor is configured to parse the signaling information, process related data, and the like.

For example, FIG. 2 shows a communication apparatus according to this application. The apparatus shown in FIG. 2 may be an AP or a non-AP station. A medium access control (medium access control, MAC) layer processing module, a physical (physical, PHY) layer processing module, a radio frequency/antenna, and the like are configured to implement related functions of the foregoing transmitter and receiver. As shown in FIG. 2, in addition to the MAC layer processing module, the PHY layer processing module, the radio frequency/antenna, a memory, and a processor, the apparatus may further include a controller and a scheduler.

It should be understood that FIG. 2 shows merely an example of an apparatus provided in this application, and does not constitute a limitation on this application. For example, the apparatus may alternatively not include the controller and/or the scheduler.

In an orthogonal frequency division multiplexing (orthogonal frequency division multiplexing, OFDM) technology, a frequency domain resource is divided into several sub-resources. Each sub-resource in frequency domain is referred to as a subcarrier (subcarrier). A subcarrier may also be understood as a minimum granularity of a frequency domain resource. A frequency difference between adjacent subcarriers is referred to as a subcarrier spacing. The solutions of this application may be applied to a system in which the OFDM technology is used.

Currently, in WLAN low-frequency communication, a physical layer protocol data unit (physical layer protocol data unit, PPDU) may be transmitted by using the OFDM technology.

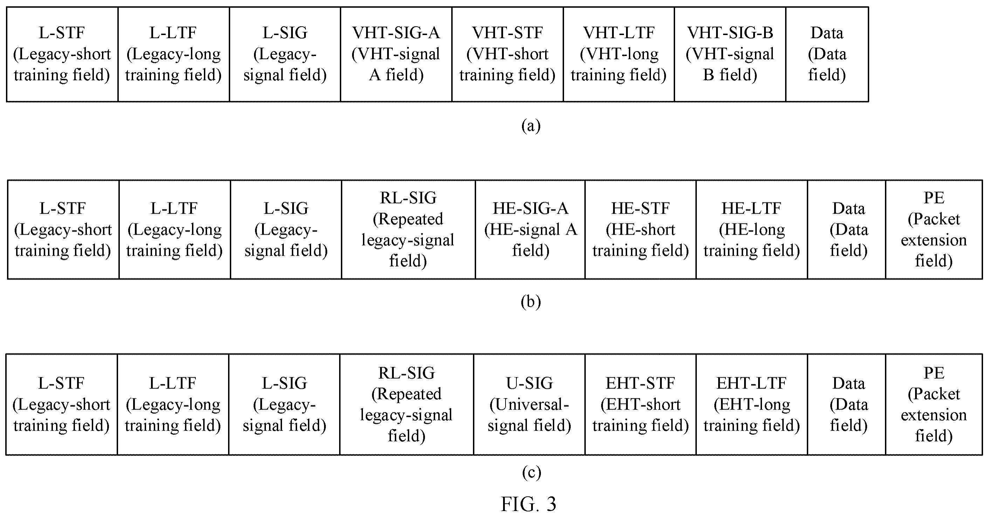

For example, FIG. 3 shows PPDU formats in several low-frequency communication protocols. (a), (b), and (c) in FIG. 3 show a format of a PPDU in the 802.11ac (namely, VHT) protocol, a format of a single-user (single-user, SU) PPDU in the 802.11ax (HE) protocol, and a format of a multi-user (multi-user, MU) PPDU in the 802.11be (EHT) protocol respectively.

As shown in (a) in FIG. 3, the VHT PPDU includes a legacy-short training field (legacy-short training field, L-STF), a legacy-long training field (legacy-long training field, L-LTF), a legacy-signal field (legacy-signal field, L-SIG), a VHT-signal A field (VHT-signal A field, VHT-SIG-A), a VHT-short training field (VHT-short training field, VHT-STF), a VHT-long training field (VHT-long training field, VHT-LTF), a VHT-signal B field (VHT-signal B field, VHT-SIG-B), and a data (Data) field.

As shown in (b) in FIG. 3, the HE SU PPDU includes an L-STF, an L-LTF, an L-SIG, a repeated legacy-signal field (repeated legacy-signal field, RL-SIG), an HE-signal A field (HE-signal A field, HE-SIG-A), an HE-short training field (HE-short training field, HE-STF), an HE-long training field (HE-long training field, HE-LTF), a data (Data) field, and a packet extension (packet extension, PE) field.

As shown in (c) in FIG. 3, the EHT MU PPDU includes an L-STF, an L-LTF, an L-SIG, an RL-SIG, a universal-signal field (universal-signal field, U-SIG), an EHT-short training field (EHT-short training field, EHT-STF), an EHT-long training field (EHT-long training field, EHT-LTF), a data (Data) field, and a packet extension (packet extension, PE) field.

It should be understood that FIG. 3 is merely an example. PPDU formats in other low-frequency communication protocols are basically similar to that in FIG. 3, and a PPDU basically includes a legacy preamble (including an L-STF, an L-LTF, and an L-SIG), a new-generation preamble (for example, a U-SIG, an EHT-STF, or an EHT-LTF), a data (Data) field, and the like.

In high-frequency communication, the OFDM technology is not used at the beginning of a PPDU. Specifically, in the high-frequency communication, a plurality of fields in a preamble are first modulated in a single carrier (single carrier, SC) mode, and only a field after the preamble is transmitted by using the OFDM technology. This achieves advantages of a low peak-to-average power ratio (peak-to-average power ratio, PAPR), phase noise suppression, and the like. However, a transmission mode in which both SC and OFDM are used in a PPDU also has some disadvantages: For example, modulation schemes in the PPDU are not unified or are incompatible with a format of a low-frequency PPDU. This causes extra complexity to a device that implements both a low frequency and a high frequency.

Therefore, a high-frequency PPDU may be transmitted by using a low-frequency PPDU-based "upclocking (upclocking)" version.

The "upclocking" is described below by using the L-STF in the VHT PPDU as an example.

In an example, a sequence format of the L-STF of the VHT PPDU in frequency domain may be shown in the following formula:

$$s_{-26,26} = \sqrt{\frac{1}{2}}\{0, 0, \mathbf{1} + \mathbf{j}, 0,0,0, -\mathbf{1} - \mathbf{j}, 0,0,0, \mathbf{1} + \mathbf{j}, 0,0,0, -\mathbf{1} - \mathbf{j}, 0,0,0, -\mathbf{1} - \mathbf{j}, 0,0,0, \mathbf{1}$$

$$+ \mathbf{j}, 0,0,0, \mathbf{0}, 0,0,0, -\mathbf{1} - \mathbf{j}, 0,0,0, -\mathbf{1} - \mathbf{j}, 0,0,0, \mathbf{1} + \mathbf{j}, 0,0,0, \mathbf{1} + \mathbf{j}, 0,0,0, \mathbf{1}$$

$$+ \mathbf{j}, 0,0,0, \mathbf{1} + \mathbf{j}, 0,0\}$$

$s_{-26,26}$ represents a sequence of subcarriers -26 to 26, and each value in {} corresponds to one subcarrier in frequency domain.

In OFDM transmission, although a quantity of subcarriers of the L-STF is 64, at a legacy low frequency, information is usually transmitted only on some of the subcarriers. Therefore, the subcarriers -26 to 26 are shown in the foregoing formula, and a total of eleven 0s on a left side and a right side of the sequence $s_{-26,26}$ are not given. Because 64 subcarriers are used and each subcarrier corresponds to 0.05 microsecond, a periodicity corresponding to the 64 subcarriers is 3.2 microseconds. Based on a relationship that a periodicity and a subcarrier spacing are reciprocals of each other, a subcarrier spacing corresponding to the foregoing sequence is 312.5 kHz (namely, 1/3.2 microsecond).

The "upclocking" means shortening a time interval between adjacent subcarriers. When a quantity of subcarriers used for sending remains unchanged, a periodicity corresponding to a same quantity of subcarriers is shortened. Because the periodicity is in a reciprocal relationship with a subcarrier spacing, the subcarrier spacing increases.

For example, for a VHT PPDU (as shown in (a) in FIG. 3), subcarrier spacings of all fields of the PPDU are 312.5 kHz. When 4x upclocking is used, a subcarrier spacing of a VHT PPDU of a 4x upclocking version (namely, a 4x 802.11ac PPDU) is 1.25 MHz (namely, 312.5 kHz × 4). When 8x upclocking is used, a subcarrier spacing of a VHT PPDU of an 8x upclocking version (namely, an 8x 802.11ac PPDU) is 2.5 MHz (namely, 312.5 kHz × 8).

For another example, for an EHT MU PPDU (as shown in (c) in FIG. 3), subcarrier spacings of all fields (including an L-STF field, an L-LTF field, an L-SIG field, an RL-SIG field, and a U-SIG field) before an EHT-STF are 312.5 kHz, subcarrier spacings of the EHT-STF and subsequent fields (including an EHT-STF field, an EHT-LTF field, a Data field, and a PE field) change to 78.125 kHz, and each 20 MHz includes 256 subcarriers. When 16x upclocking is used, in an EHT MU PPDU of a 16x upclocking version (namely, a 16x 802.11be PPDU), a subcarrier spacing of a field before an EHT-STF is 5 MHz (namely, 312.5 kHz × 16), and subcarrier spacings of the EHT-STF and a subsequent field, for example, a data field, are 1.25 MHz (namely, 78.125 kHz × 16).

Table 1 shows parameters of the 4x 802.11 ac PPDU, the 8x 802.11 ac PPDU, and the 16x 802.11be PPDU. The parameters include: bandwidth available for transmission, a subcarrier spacing, a discrete Fourier transform (discrete fourier transform, DFT)/inverse discrete Fourier transform (inverse discrete fourier transform, IDFT) periodicity, and an IDFT/DFT size. The IDFT/DFT size may also be referred to as a quantity of points or a quantity of subcarriers of IDFT/DFT. For example, the IDFT size being 64 indicates 64-point or 64-subcarrier IDFT.

Table 1

|  | 4x 802.11ac | 8x 802.11ac | 16x 802.11be |
|---|---|---|---|
| Bandwidth | 80/160/320/640 MHz | 160/320/640/1280 MHz | 320/640/1280/2560/ 5120 MHz |
| Subcarrier spacing | 1.25 MHz (=0.3125 × 4) | 2.5 MHz (=0.3125 × 8) | 1.25 MHz (=0.078125 × 16) (For an 802.11be part) |

(continued)

|  | 4x 802.11ac | 8x 802.11ac | 16x 802.11be |
|---|---|---|---|
| IDFT/DFT periodicity | 800 ns | 400 ns | 800 ns |
| IDFT/DFT size | 64/128/256/512 | 64/128/256/512 | 256/512/1024/2048/ 4096 |

In the foregoing sequence $s_{-26,26}$, there are three 0s between non-null subcarriers. Without considering that "non-null subcarriers are spaced apart by three 0s", a quantity of subcarriers is 16 (to be specific, subcarriers in bold in the foregoing sequence). A periodicity corresponding to the 16 subcarriers is 0.8 microsecond. To be specific, the periodicity is a quarter of an original periodicity. Compared with a case in which 0s are not considered, in a case in which 0s are considered, a quantity of subcarriers is larger, and this is equivalent to extending sending time. Therefore, there are actually four L-STF symbols per 3.2 microseconds. In other words, the L-STF field of the PPDU occupies four symbols in time domain.

In this application, for a subcarrier spacing, without considering that "non-null subcarriers are spaced apart by three 0s", the subcarrier spacing is four times the subcarrier spacing shown in the foregoing formula. For ease of description, in the L-STF, a subcarrier spacing in a case in which that "non-null subcarriers are spaced apart by three 0s" is considered is referred to as a nominal subcarrier spacing, and a subcarrier spacing in a case in which that "non-null subcarriers are spaced apart by three 0s" is not considered is referred to as an actual subcarrier spacing. Therefore, a periodicity corresponding to the 64 subcarriers in the L-STF sequence is 3.2 microseconds, and the nominal subcarrier spacing is 312.5 kHz (namely, 1/3.2 microsecond). Actually, each L-STF symbol lasts for 0.8 microseconds, and the actual subcarrier spacing is 1.25 MHz (namely, 1/0.8 microsecond). In the foregoing descriptions of the "upclocking", the nominal subcarrier spacing is used as a basis for calculation. However, the actual subcarrier spacing may alternatively be used as a basis for calculation. For example, for a VHT PPDU (as shown in (a) in FIG. 3), actual subcarrier spacings of all fields of the PPDU are 1.25 MHz. When 4x upclocking is used, an actual subcarrier spacing of a VHT PPDU of a 4x upclocking version (namely, a 4x 802.11ac PPDU) is 5 MHz (namely, 1.25 MHz × 4).

For ease of description, a subcarrier spacing may be a nominal subcarrier spacing, unless otherwise specified.

It should be understood that the L-STF may be used for symbol detection, carrier frequency offset (carrier frequency offset, CFO) correction, and the like. A maximum range of CFO correction is half of an actual subcarrier spacing. To be specific, an offset on which CFO correction can be performed ranges from -1/2 subcarrier spacing to 1/2 subcarrier spacing. Therefore, in the L-STF, a CFO that can be corrected ranges from -612.5 kHz to +612.5 kHz.

In addition, the L-STF in the VHT PPDU is an L-STF sequence corresponding to 20 MHz. In low-frequency communication, during sending of a 40 MHz, 80 MHz, 160 MHz, or even 320 MHz PPDU, the L-STF is repeatedly sent (duplicated) on each 20 MHz. The "duplicating" may mean being completely the same, or may mean that content is duplicate. An actual sequence may be obtained by multiplying the L-STF sequence by a coefficient (for example, +1, -1, j, or - j). This can implement phase rotation and reduce a PAPR.

It should be further understood that, in the foregoing descriptions, a "subcarrier spacing of a PPDU" or a "subcarrier spacing of a field" is a subcarrier spacing between subcarriers used to send the PPDU or the field.

It can be learned from the foregoing descriptions that, in a current PPDU of an "upclocking" version, a unified "upclocking" mode is sampled used. To be specific, "upclocking" of a same multiple is used for different parts of a PPDU. However, a unified upclocking version is not an optimal choice. For example, because a range of CFO correction is half of an actual subcarrier spacing, a larger subcarrier spacing definitely indicates a larger offset correction range, but a smaller subcarrier spacing indicates higher correction accuracy. Therefore, with an increase in a subcarrier spacing, correction accuracy is correspondingly affected. For another example, in a data field part, because offset correction has been performed, when a quantity of subcarriers remains unchanged, a larger subcarrier spacing indicates smaller interference between subcarriers and therefore indicates a higher performance gain.

In view of this, this application provides a communication method and a communication apparatus, to enable all PPDUs in high-frequency communication to be transmitted in an OFDM mode, to facilitate PPDU receiving and sending by a device. In addition, different requirements of different parts of a high-frequency PPDU for a subcarrier spacing can be met, to achieve better transmission performance.

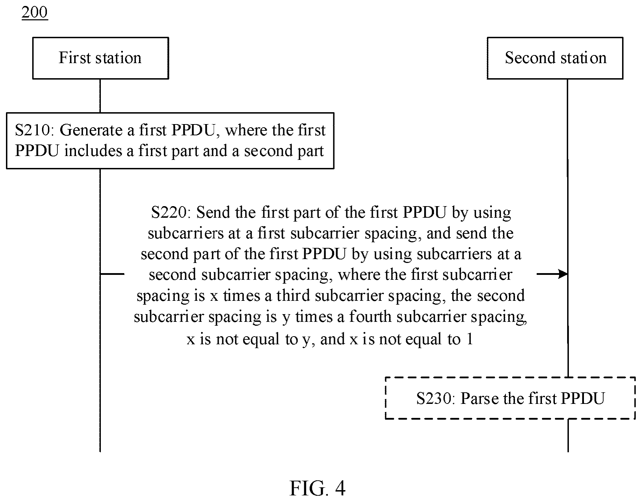

FIG. 4 is a schematic flowchart of a communication method 200 according to an embodiment of this application. The method 200 is described by using interaction between a first station and a second station as an example. The method 200 may include the following steps.

S210: The first station generates a first physical layer protocol data unit (physical layer protocol data unit, PPDU).

In this application, the first station may be a network-side device, for example, an AP; or the first station may be a terminal-side device, for example, a non-AP station.

The first PPDU includes a first part and a second part, and the first part of the first PPDU is located before the second part of the first PPDU in a frame format.

It should be understood that a PPDU may include one or more fields. In this application, a PPDU may be divided in terms of a frame format. At least one field at a position near the front in the frame format may be referred to as the first part of the first PPDU. At least one field at a position near the back in the frame format may be referred to as the second part of the first PPDU.

In addition, the first PPDU may further include or not include another part in addition to the first part and the second part. This is not limited in this application.

In this application, "a first part of a PPDU" may also be referred to as "a first part of fields of a PPDU", and "a second part of a PPDU" may also be referred to as "a second part of fields of a PPDU".

S220: The first station sends the first part of the first PPDU by using subcarriers at a first subcarrier spacing, and sends the second part of the first PPDU by using subcarriers at a second subcarrier spacing. Correspondingly, the second station receives the first part of the first PPDU by using subcarriers at the first subcarrier spacing, and receives the second part of the first PPDU by using subcarriers at the second subcarrier spacing.

In this application, the second station may be a network-side device, for example, an AP; or the second station may be a terminal-side device, for example, a non-AP station. In other words, the method 200 is applicable to the scenario shown in FIG. 1.

The first subcarrier spacing is x times a third subcarrier spacing. The second subcarrier spacing is y times a fourth subcarrier spacing. The third subcarrier spacing is a subcarrier spacing between subcarriers for transmitting a first part of a second PPDU. The fourth subcarrier spacing is a subcarrier spacing between subcarriers for transmitting a second part of the second PPDU. The first part of the second PPDU is located before the second part of the second PPDU in a frame format. x is not equal to y, and x is not equal to 1.

In other words, a ratio (namely, x) of a subcarrier spacing (namely, the first subcarrier spacing) corresponding to the subcarriers used to transmit the first part of the first PPDU to a subcarrier spacing (namely, the third subcarrier spacing) corresponding to the subcarriers used to transmit the first part of the second PPDU is different from a ratio (namely, y) of a subcarrier spacing (namely, the second subcarrier spacing) corresponding to the subcarriers used to transmit the second part of the first PPDU to a subcarrier spacing (namely, the fourth subcarrier spacing) corresponding to the subcarriers used to transmit the second part of the second PPDU; and the subcarrier spacing (namely, the first subcarrier spacing) corresponding to the subcarriers used to transmit the first part of the first PPDU is different from the subcarrier spacing (namely, the third subcarrier spacing) corresponding to the subcarriers used to transmit the first part of the second PPDU.

Optionally, the third subcarrier spacing and the fourth subcarrier spacing may be the same or different.

It should be understood that all of the foregoing subcarrier spacings may be actual subcarrier spacings or nominal subcarrier spacings. This is not limited in this application.

Optionally, the "subcarrier spacing" mentioned in the "first subcarrier spacing", the "second subcarrier spacing", the "third carrier spacing", and the "fourth subcarrier spacing" has a same meaning. For example, the "subcarrier spacing" is an actual subcarrier spacing. For another example, the "subcarrier spacing" is a nominal subcarrier spacing.

In this application, "transmission" includes sending and/or receiving. For example, "transmitting a PPDU" may mean sending the PPDU, or may mean receiving the PPDU, or may mean sending and receiving the PPDU. Therefore, a subcarrier spacing between subcarriers used to transmit the second PPDU may include a subcarrier spacing between subcarriers used to send the second PPDU or a subcarrier spacing between subcarriers used to receive the second PPDU.

The first PPDU is transmitted on a first frequency band, and the second PPDU is transmitted on a second frequency band.

In other words, the first PPDU is sent or received on the first frequency band, and the second PPDU is sent or received on the second frequency band.

A lowest frequency of the first frequency band is greater than or equal to a highest frequency of the second frequency band.

For example, the first frequency band is a "high frequency" band defined in any one of the IEEE 802.11 standards. For example, the lowest frequency of the first frequency band is greater than or equal to 45 GHz.

For example, the second frequency band is a "low frequency" band defined in any one of the IEEE 802.11 standards. For example, the highest frequency of the second frequency band is less than or equal to 7 GHz.

According to the foregoing solution, in this application, both the subcarrier spacing between the subcarriers for transmitting the first part of the first PPDU and the subcarrier spacing between the subcarriers for transmitting the second part of the first PPDU are defined. Therefore, both the first part and the second part of the first PPDU may be transmitted in an OFDM mode, to avoid use of a hybrid transmission mode of SC and OFDM. This facilitates PPDU receiving and sending by a device. In addition, different requirements of different parts of the first PPDU for a subcarrier spacing can be met, to achieve better transmission performance.

For example, the first part of the first PPDU is transmitted at a small subcarrier spacing, to improve offset correction performance of the first part of the first PPDU; and the second part of the first PPDU is transmitted at a large subcarrier spacing, to improve decoding performance of the second part of the first PPDU. To sum up, a packet error rate of the first PPDU can be reduced through transmission at an appropriate subcarrier spacing.

Optionally, the method 200 includes the following step: S230: The second station parses the first PPDU.

For example, the second station may parse each field in the first PPDU, and obtain data carried in the first PPDU.

Optionally, the first part of the second PPDU is not duplicate in a basic channel element of the second frequency band.

Optionally, the second part of the second PPDU is not duplicate in the basic channel element of the second frequency band either.

In this application, a basic channel element is determined based on a channel design of the first frequency band or the second frequency band. The basic channel element may also be referred to as a channel granularity, a bandwidth granularity, or the like, and is a minimum available channel on the first frequency band or the second frequency band, or minimum bandwidth available for a PPDU on the first frequency band or the second frequency band.

For example, if the first frequency band is a "high frequency" band defined in any one of the IEEE 802.11 standards, a basic channel element of the first frequency band may be 2.16 GHz or 1.08 GHz.

Optionally, the basic channel element of the first frequency band may alternatively be an integer multiple of the basic channel element of the second frequency band.

For another example, if the second frequency band is a "low frequency" band defined in any one of the IEEE 802.11 standards, the basic channel element of the second frequency band may be 20 MHz in 802.11n, 11g, 11ac, 11ax, or 11be.

Optionally, the basic channel element of the first frequency band may be an integer multiple of 20 MHz, for example, 20 MHz, 40 MHz, 80 MHz, 160 MHz, 320 MHz, or 640 MHz.

Optionally, in an implementation, the first part of the first PPDU is repeatedly sent (duplicated) in the basic channel element of the first frequency band.

That the first part of the first PPDU is repeatedly sent in the basic channel element of the first frequency band may be understood as that a plurality of first parts of the first PPDU are sent in the basic channel element of the first frequency band.

The "duplicating" herein may mean being completely the same; or may mean that only content is duplicate, to be specific, there are a plurality of pieces of duplicate content (namely, the plurality of first parts of the first PPDU) in the basic channel element of the first frequency band, but phase rotation may be performed on the same content (the first parts of the first PPDU), to be specific, the same content is multiplied by different coefficients.

Therefore, optionally, that the first part of the first PPDU is repeatedly sent in the basic channel element of the first frequency band may alternatively be: A first part, multiplied by a specific coefficient, of the first PPDU is sent in a basic channel element.

For example, a repeatedly sent sequence may be obtained by multiplying a basic sequence by a coefficient, for example, +1, -1, j, or -j. This can implement phase rotation and reduce a peak-to-average power ratio (peak-to-average power ratio, PAPR, peak-to-average ratio for short).

It should be understood that, because an OFDM symbol is obtained by superposing a plurality of independently modulated subcarrier signals, when phases of subcarriers are the same or similar, superposed signals are modulated by using a same initial phase signal, causing a high PAPR. Therefore, when the first part of the first PPDU is repeatedly sent, the $1^{st}$ sent sequence (namely, an initial phase signal) may be multiplied by a coefficient, for example, +1, -1, j, or -j, to implement phase rotation and reduce a PAPR.

It should be further understood that the foregoing coefficients are merely examples and are not construed as a limitation on this application. During application, the coefficient may be specified as any value.

In addition, a repeatedly sent sequence may alternatively be slightly adjusted based on the basic sequence. For example, values of some subcarriers in the basic sequence are changed. For another example, some subcarriers are deleted from or added to the basic sequence. The slight adjustment may also be understood as repeated sending.

In this implementation, x and y meet the following relationship: x is less than y.

Specifically, x is less than y, and therefore a frequency domain width of the first part of the first PPDU is less than a frequency domain width of the second part of the first PPDU. The first part of the first PPDU is repeatedly sent in the basic channel element of the first frequency band, so that a transmission bandwidth requirement of the first PPDU can be met.

A total quantity of times that the first part of the first PPDU is sent in the basic channel element of the first frequency band may be y/x.

Specifically, x is less than y, and therefore a ratio of the frequency domain width of the first part of the first PPDU to the frequency domain width of the second part of the first PPDU is x/y. To ensure that different parts of a PPDU correspond to same transmission bandwidth, the total quantity of times that the first part of the first PPDU is sent in the basic channel element of the first frequency band may be y/x times.

Optionally, in another implementation, a size of data carried in the second part of the first PPDU in the basic channel element of the first frequency band is greater than a size of data carried in the second part of the second PPDU. Therefore, a frequency domain width of the second part of the first PPDU is supplemented to be the same as a frequency domain width of the first part of the first PPDU, in other words, some fields in the second part of the first PPDU are repeatedly sent in the basic channel element of the first frequency band.

In this implementation, x and y meet the following relationship: x is greater than y.

Specifically, x is greater than y, and therefore the frequency domain width of the first part of the first PPDU is greater than the frequency domain width of the second part of the first PPDU. The frequency domain width of the second part of the first PPDU is supplemented to be the same as the frequency domain width of the first part of the first PPDU, so that a transmission bandwidth requirement of the first PPDU can be met.

A total quantity of times that the second part of the first PPDU is sent in the basic channel element of the first frequency band may be x/y.

Specifically, x is greater than y, and therefore a ratio of the frequency domain width of the second part of the first PPDU to the frequency domain width of the first part of the first PPDU is y/x. To ensure that different parts of a PPDU correspond to same transmission bandwidth, the total quantity of times that the second part of the first PPDU is sent in the basic channel element of the first frequency band may be x/y times.

Optionally, the second part of the first PPDU includes a data field.

It should be understood that, during sending of the second part of the first PPDU, some fields (for example, a signal field) in the second part of the first PPDU may be repeatedly sent, and data carried in the data field in the second part of the first PPDU may vary each time. That is, a data field in the first PPDU may carry more data than the data field in the second PPDU.

Optionally, the first part of the second PPDU is used to correct a CFO.

For example, the second PPDU is any one of the following: a VHT PPDU, an HE PPDU, and an EHT PPDU. To be specific, the second PPDU may be a PPDU in a VHT standard, an HE standard, or an EHT standard. This is specifically shown in FIG. 3. In addition, the second PPDU may alternatively be a PPDU in a later version of 802.11, or may be a next-generation PPDU in 802.11. The first part of the second PPDU may include an L-STF of the PPDU. The second part of the second PPDU may include all fields in the PPDU other than the L-SFT.

It should be understood that, in this application, that the first part of the second PPDU is used to correct a CFO is used as an example. However, the first part of the second PPDU may also be used to implement other functions, for example, PPDU discovery, coarse synchronization, and automatic gain control. This is not limited in this application.

Optionally, the first part of the first PPDU is used to correct a CFO.

It should be understood that, in this application, that the first part of the first PPDU is used to correct a CFO is used as an example. However, the first part of the first PPDU may also be used to implement other functions, for example, PPDU discovery, coarse synchronization, and automatic gain control.

For example, in this application, the first part of the first PPDU and the first part of the second PPDU may have similar functions or have some same functions.

In a possible implementation, the first PPDU may be obtained based on the second PPDU.

For example, the first part of the first PPDU and the first part of the second PPDU include a same field, for example, both include an L-STF field. A difference lies in that a subcarrier spacing between subcarriers used to transmit the field in the first PPDU is different from a subcarrier spacing between subcarriers used to transmit the field in the second PPDU.

Optionally, the second part of the first PPDU includes a data field.

In an example, the first part of the first PPDU includes an L-STF, and the L-STF is used to correct a CFO.

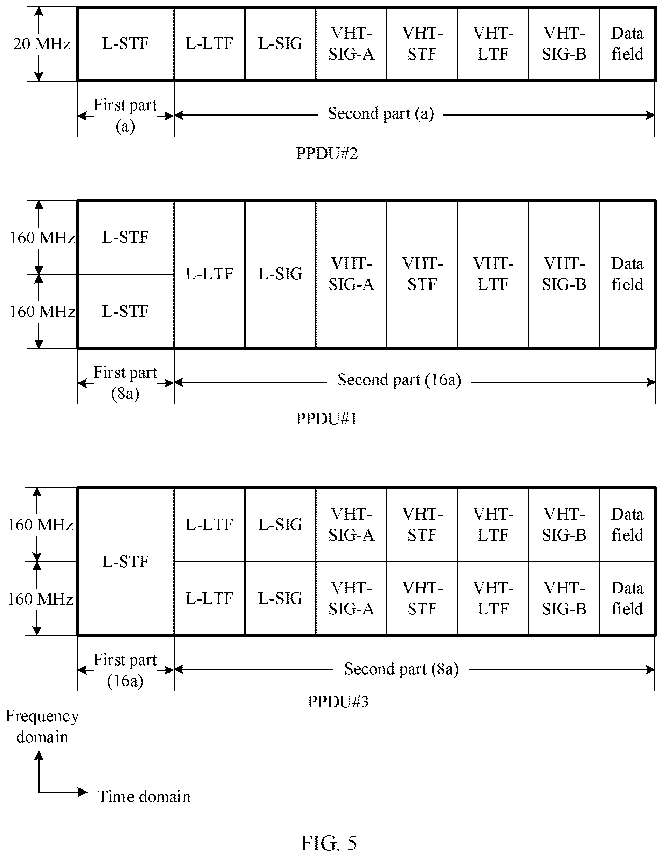

For example, FIG. 5 is a diagram of a format of a first PPDU and a format of a second PPDU according to an embodiment of this application. This example is described below in detail by using FIG. 5 as an example. In FIG. 5, it is assumed that a basic channel element of a low frequency band is 20 MHz, and a basic channel element of a high frequency band is 320 MHz. In FIG. 5, a in parentheses represents an actual subcarrier spacing.

As shown in FIG. 5, a PPDU#2 (an example of the second PPDU) is a VHT PPDU (as shown in (a) in FIG. 3). A first part of the PPDU#2 includes an L-STF, and a second part of the PPDU#2 includes fields other than the L-STF. The PPDU#2 is transmitted on the low frequency band with 20 MHz as a basic channel element. An actual subcarrier spacing a between subcarriers used to transmit all fields in the PPDU#2 is 1.25 MHz.

Fields included in a PPDU#1 (an example of the first PPDU) are the same as the fields included in the PPDU#2. A first part of the PPDU#1 includes an L-STF, and a second part of the PPDU#1 includes fields other than the L-STF. The PPDU#1 is transmitted on the high frequency band. An actual subcarrier spacing between subcarriers used for the L-STF in the PPDU#1 may be 10 MHz, which is 8 times an actual subcarrier spacing between subcarriers used to transmit the L-STF in the PPDU#2. An actual subcarrier spacing between subcarriers used for a field in the PPDU#1 other than the L-STF may be greater than 10 MHz, for example, 20 MHz, which is 16 times an actual subcarrier spacing between subcarriers used to transmit a field in the PPDU#2 other than the L-STF. Because 8 times is less than 16 times, a frequency domain width (160 MHz = 20 MHz × 8) of the L-STF in the PPDU#1 is less than a frequency domain width (320 MHz = 20 MHz × 16) of another field. To satisfy sending at bandwidth of 320 MHz, the L-STF in the PPDU#1 may be repeatedly sent within 320 MHz. Therefore, as shown in FIG. 5, the L-STF in the PPDU#1 may be duplicated twice within 320 MHz (to be specific, the L-STF in the PPDU#1 is divided into two lines in frequency domain), and a frequency domain width occupied each time is 160 MHz. A reason for performing duplication twice is that 16/8=2.

Fields included in a PPDU#3 (another example of the first PPDU) are the same as the fields included in the PPDU#2. A first part of the PPDU#3 includes an L-STF, and a second part of the PPDU#3 includes fields other than the L-STF. The PPDU#3 is transmitted on the high frequency band. An actual subcarrier spacing between subcarriers used for the L-STF in the PPDU#3 may be 20 MHz, which is 16 times an actual subcarrier spacing between subcarriers used to transmit the L-STF in the PPDU#2. An actual subcarrier spacing between subcarriers used for a field in the PPDU#3 other than the L-STF may be less than 20 MHz, for example, 10 MHz, which is 8 times an actual subcarrier spacing between subcarriers used to transmit a field in the PPDU#2 other than the L-STF. Because 16 times is greater than 8 times, a frequency domain width (320 MHz = 20 MHz $\times$ 16) of the L-STF in the PPDU#3 is greater than a frequency domain width (160 MHz = 20 MHz $\times$ 8) of another field. To satisfy sending at bandwidth of 320 MHz, a frequency domain width of a field in the PPDU#3 other than the L-STF may be supplemented to be the same as the frequency domain width of the L-STF. Therefore, as shown in FIG. 5, fields in the PPDU#3 other than the L-STF may be sent twice within 320 MHz (to be specific, an L-LTF, an L-SIG, a VHT-SIG-A, a VHT-STF, a VHT-LTF, a VHT-SIG-B, and a data field in the PPDU#3 each are divided into two lines in frequency domain), and a frequency domain width occupied each time is 160 MHz. A reason for performing sending twice is that 16/8=2. It should be understood that the data field in the PPDU#3 may carry different data during each time of sending.

In FIG. 5, fields used to correct a CFO in the PPDU#1, the PPDU#2, and the PPDU#3 are the L-STF, and the field is located in the first part in the PPDU#1, the PPDU#2, and the PPDU#3.

According to the foregoing solution, a high-frequency PPDU may be designed based on an existing low-frequency PPDU. This is simple and efficient.

It should be understood that, in FIG. 5, some fields in the PPDU#1 and the PPDU#3 are divided into two lines. This indicates only duplication in frequency domain or an increase in a quantity of subcarriers. A name and a format of a field in the first PPDU (for example, the PPDU#1 or the PPDU#3) are not limited in this application. Specifically, a field divided into two lines may be referred to as two fields, or may be referred to as one field. A name of the field may be correspondingly the same as a name in the PPDU#2, or may be another newly defined name. This is not limited. For example, for the PPDU#1 in FIG. 5, the PPDU may be referred to as including two L-STF fields that each occupy 160 MHz, or the PPDU may be referred to as including one L-STF field of 320 MHz.

Optionally, in this example, a quantity of symbols occupied by the legacy-short training field in the first PPDU in time domain is greater than a quantity of symbols occupied by the legacy-short training field in the second PPDU in time domain.

For example, a legacy low-frequency PPDU (an example of the second PPDU) includes 10 L-STF symbols. In this case, during high-frequency transmission, more L-STF symbols, for example, 15 or 20 L-STF symbols, may be transmitted in a high-frequency PPDU (an example of the first PPDU).

It should be understood that, in this application, one field occupies one or more symbols in time domain, and different fields may occupy a same quantity of symbols or different quantities of symbols.

According to the foregoing solution, a receive end can have more L-STF symbols to correct a CFO, to improve offset correction accuracy.

Optionally, in this example, a frequency domain sequence of the L-STF in the first PPDU may be the same as or different from a frequency domain sequence of the L-STF in the second PPDU.

In other words, in this application, a frequency domain sequence of a field used to correct a CFO in a high-frequency PPDU may be the same as or different from that in a low-frequency PPDU.

In another example, the first part of the first PPDU includes a new field, and the new field is used to correct a CFO.

The new field may also be referred to as a third field, and may implement functions of CFO correction, symbol detection, and the like.

Optionally, in this example, the first PPDU may not include an L-STF.

Optionally, in this example, the first PPDU may alternatively include an L-SFT, and the L-STF is located after the new field in a frame format. For example, the L-STF may be located in the second part of the first PPDU.

In an implementation, if the first PPDU includes the L-SFT, a quantity of symbols occupied by the L-STF in the first PPDU in time domain is less than or equal to a quantity of symbols occupied by the L-STF in the second PPDU in time domain.

Specifically, because the new field may implement the functions of CFO correction, symbol detection, and the like and the L-STF also has similar functions, the L-STF in the first PPDU may be shortened or deleted.

For example, a legacy low-frequency PPDU (an example of the second PPDU) includes 10 L-STFs. In this case, during high-frequency transmission, fewer L-STFs, for example, 5 or 3 L-STFs, may be transmitted in a high-frequency PPDU (an example of the first PPDU).

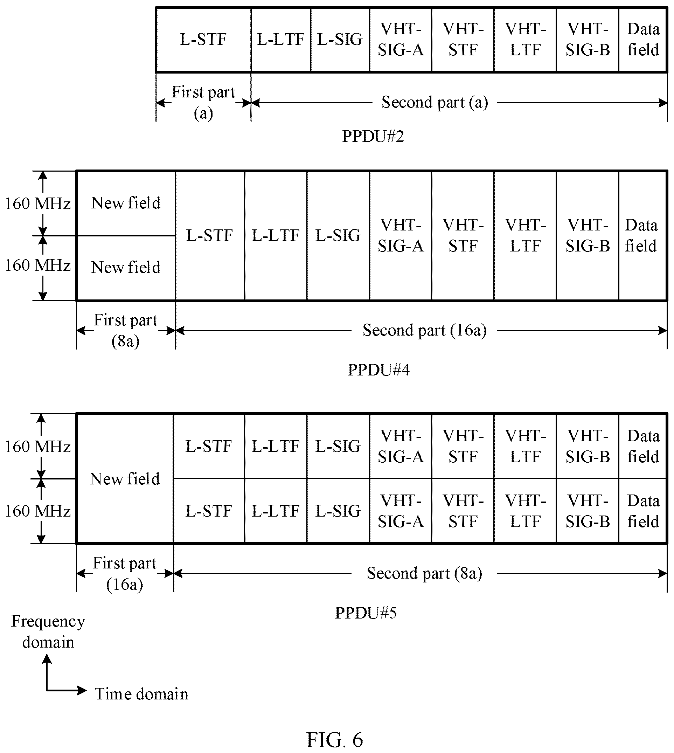

For example, FIG. 6 is a diagram of a format of a first PPDU and a format of a second PPDU according to an embodiment of this application. This example is described below in detail by using FIG. 6 as an example. In FIG. 6, it is assumed that a basic channel element of a low frequency band is 20 MHz, and a basic channel element of a high frequency band is 320 MHz. In FIG. 6, a in parentheses represents an actual subcarrier spacing. As shown in FIG. 6, a PPDU#2 (an example of the second PPDU) is a VHT PPDU (as shown in (a) in FIG. 3). A first part of the PPDU#2 includes an L-STF, and a second part of the PPDU#2 includes fields other than the L-STF. The PPDU#2 is transmitted on the low frequency band with 20 MHz as a basic channel element. An actual subcarrier spacing between subcarriers used to transmit all fields in the PPDU#2 is 1.25 MHz.

A PPDU#4 (another example of the first PPDU) includes a new field and fields that are the same as the fields in the PPDU#2 (where the fields that are the same as the fields in the PPDU#2 include an L-STF). A first part of the PPDU#4 includes the new field, and a second part of the PPDU#4 includes the fields that are the same as the fields in the PPDU#2. The PPDU#4 is transmitted on the high frequency band. An actual subcarrier spacing between subcarriers used for the new field in the PPDU#4 may be 10 MHz, which is 8 times an actual subcarrier spacing between subcarriers used to transmit the L-STF in the PPDU#2. An actual subcarrier spacing between subcarriers used for a field, in the PPDU#4, that is the same as a field in the PPDU#2 may be greater than 10 MHz, for example, 20 MHz, which is 16 times an actual subcarrier spacing between subcarriers used to transmit a field in the PPDU#2 other than the L-STF. Because 8 times is less than 16 times, a frequency domain width (160 MHz = 20 MHz × 8) of the new field in the PPDU#4 is less than a frequency domain width (320 MHz = 20 MHz × 16) of another field. To satisfy sending at bandwidth of 320 MHz, the new field in the PPDU#4 may be repeatedly sent within 320 MHz. Therefore, as shown in FIG. 6, the new field in the PPDU#4 may be duplicated twice within 320 MHz (to be specific, the new field in the PPDU#4 is divided into two lines in frequency domain), and a frequency domain width occupied each time is 160 MHz. A reason for performing duplication twice is that 16/8=2.

A PPDU#5 (another example of the first PPDU) includes a new field and fields that are the same as the fields in the PPDU#2 (where the fields that are the same as the fields in the PPDU#2 include an L-STF). A first part of the PPDU#5 includes the new field, and a second part of the PPDU#5 includes the fields that are the same as the fields in the PPDU#2. The PPDU#5 is transmitted on the high frequency band. An actual subcarrier spacing between subcarriers used for the new field in the PPDU#5 may be 20 MHz, which is 16 times an actual subcarrier spacing between subcarriers used to transmit the L-STF in the PPDU#2. An actual subcarrier spacing between subcarriers used for a field, in the PPDU#5, that is the same as a field in the PPDU#2 may be less than 20 MHz, for example, 10 MHz, which is 8 times an actual subcarrier spacing between subcarriers used to transmit a field in the PPDU#2 other than the L-STF. Because 16 times is greater than 8 times, a frequency domain width (320 MHz = 20 MHz × 16) of the new field in the PPDU#5 is greater than a frequency domain width (160 MHz = 20 MHz × 8) of another field. To satisfy sending at bandwidth of 320 MHz, a frequency domain width of a field, in the PPDU#5, that is the same as a field in the PPDU#2 may be supplemented to be the same as the frequency domain width of the new field. Therefore, as shown in FIG. 6, the fields in the PPDU#5 that are the same as the fields in the PPDU#2 may be sent twice within 320 MHz (to be specific, the L-STF, an L-LTF, an L-SIG, a VHT-SIG-A, a VHT-STF, a VHT-LTF, a VHT-SIG-B, and a data field in the PPDU#5 each are divided into two lines in frequency domain), and a frequency domain width occupied each time is 160 MHz. A reason for performing sending twice is that 16/8=2. It should be understood that the data field in the PPDU#5 may carry different data during each time of sending.

In FIG. 6, a field used to correct a CFO in the PPDU#2 is the L-STF, and the field is located in the first part of the PPDU#2. However, fields used to correct a CFO in the PPDU#4 and the PPDU#5 are the new field, and the new field is located in the first part in the PPDU#4 and the PPDU#5. In addition, the L-STF in the PPDU#4 and the PPDU#5 is located in the second part.

It should be understood that, in FIG. 6, some fields in the PPDU#4 and the PPDU#5 are divided into two lines. This indicates only duplication in frequency domain or an increase in a quantity of subcarriers. A name and a format of a field in the first PPDU (for example, the PPDU#4 or the PPDU#5) are not limited in this application. Specifically, a field divided into two lines may be referred to as two fields, or may be referred to as one field. A name of the field may be correspondingly the same as a name in the PPDU#2, or may be another newly defined name. This is not limited. For example, for the PPDU#5 in FIG. 6, the PPDU may be referred to as including two data fields that each occupy 160 MHz, or the PPDU may be referred to as including one data field that occupies 320 MHz.

Optionally, in FIG. 6, a quantity of symbols occupied, in time domain, by the L-STF included in the PPDU#4 and the PPDU#5 is less than a quantity of symbols occupied, in time domain, by the L-STF included in the PPDU#2.

Optionally, in FIG. 6, the PPDU#4 and the PPDU#5 may not include an L-STF.

According to the foregoing solution, during design of a high-frequency PPDU, integrity of a low-frequency PPDU at a high frequency can be ensured, to facilitate demodulation.

It should be understood that FIG. 5 and FIG. 6 are merely examples. The PPDU#2 may alternatively include other fields, and at least one of the PPDU#1, the PPDU#3, the PPDU#4, and the PPDU#5 may alternatively include other fields. This is not limited in this application.

In addition, in FIG. 5 and FIG. 6, an example in which the PPDU#2 is a VHT PPDU is used for description. The PPDU#2 may alternatively be any PPDU operating on a high frequency band. For example, the PPDU#2 is an HE SU PPDU, as shown in (b) in FIG. 3. For another example, the PPDU#2 is an EHT MU PPDU, as shown in (c) in FIG. 3.

It should be further understood that, in this application, that a field used to correct a CFO is a legacy-short training field (legacy-short training field, L-STF) is used as an example. This is merely an example, and the field used to correct a CFO may alternatively have another name, for example, is referred to as a short training field (short training field, STF) or a training field (training field, TF). This is not limited in this application.

It should be further understood that, in FIG. 5 and FIG. 6, an actual subcarrier spacing is used as an example for description. This is merely an example and is not construed as a limitation on this application. For example, during determining of a subcarrier spacing of the first PPDU, a nominal subcarrier spacing of the second PPDU may alternatively be used, and a corresponding result is a nominal subcarrier spacing of the first PPDU.

Optionally, in this application, a frequency domain sequence of the new field may be the same as or different from a frequency domain sequence of the L-STF in the second PPDU. This is not limited in this application.

In other words, in this application, a frequency domain sequence of a field used to correct a CFO in a high-frequency PPDU may be the same as or different from that in a low-frequency PPDU.

For example, x meets the following condition:

$$\mathrm{x} \geq \frac{4 * f_a * e}{\Delta f} \qquad (1)$$

In the formula (1), $f_a$ is a highest frequency of the first frequency band, $e$ is a maximum error allowed for a device operating on the first frequency band, a value of $e$ may be defined in a standard, and $\Delta f$ is the third subcarrier spacing.

It should be understood that $e$ is a maximum error, defined in a standard, of a device on the first frequency band. However, during actual application, a maximum error of a device manufactured by each manufacturer may be less than or equal to $e$. For example, a maximum error allowed for the first station in CFO correction may be $e$, or may be less than $e$. Similarly, a maximum error allowed for the second station in CFO correction may be $e$, or may be less than $e$.

For example, in a WLAN, an error of a device in CFO correction usually needs not to exceed 20 parts per million, namely, 20 ppm. Therefore, $e = 20$ *ppm.* It is assumed that the highest frequency of the first frequency band is 70 GHz. In an extreme case, a subcarrier frequency offset between devices at two ends may reach 70 GHz $\times$ 2 $\times$ 20 ppm = $\pm$2.8 MHz. Because a range of CFO correction is half of an actual subcarrier spacing, an actual subcarrier spacing at a high frequency should be at least 5.6 MHz. An actual subcarrier spacing (an example of the third subcarrier spacing) of an L-STF in a low-frequency PPDU is 312.5 $\times$ 4 kHz = 1.25 MHz. Therefore, to satisfy an offset correction capability of a high-frequency PPDU, a multiple (namely, x) by which a first subcarrier spacing in the high-frequency PPDU needs to be increased is at least 5.6 MHz/1.25 MHz, namely, 4.48. It should be understood that both the first subcarrier spacing and the third subcarrier spacing herein are actual subcarrier spacings.

According to the foregoing solution, an offset correction requirement for the first PPDU at a high frequency can be ensured, to improve transmission performance of the first PPDU.

Optionally, both x and y are positive integers.

For example, when the foregoing formula (1) is satisfied, x is an integer.

Optionally, in an implementation scenario, the method 200 includes: A third station sends a first part of a third PPDU by using subcarriers at the first subcarrier spacing, and sends a second part of the third PPDU by using subcarriers at a fifth subcarrier spacing. Correspondingly, a fourth station receives the first part of the third PPDU by using subcarriers at the first subcarrier spacing, and receives the second part of the third PPDU by using subcarriers at the fifth subcarrier spacing.

The first subcarrier spacing is x times the third subcarrier spacing, the fifth subcarrier spacing is z times the fourth subcarrier spacing, and y is not equal to z.

The third PPDU is transmitted on the first frequency band.

In other words, a plurality of PPDUs with different subcarrier spacings may be transmitted on the first frequency band.

Optionally, x and z may be equal or not equal. A magnitude relationship between x and z is not limited in this application.

For example, a value of x may be 8, a value of y may be 16, and a value of z may be 8.

It should be understood that the third station and the first station may be the same or different. This is not limited in this application.

It should be understood that the fourth station and the second station may be the same or different. This is not limited in this application. In other words, a receive-end device of the third PPDU may be the second station or any other station.

In this implementation scenario, the method may further include: The first station sends first information to the second station, where the first information indicates values of x and y.

In this implementation scenario, the method may further include: The third station sends second information to the fourth station, where the second information indicates values of x and z.

Specifically, capability negotiation may be performed between a transmit-end device and a receive-end device, to determine a format of a high-frequency PPDU, or negotiate upon a to-be-used format of a high-frequency PPDU.

The first information and/or the second information may be transmitted on the first frequency band or the second frequency band. This is not limited in this application.

Optionally, fields included in the first part of the first PPDU are the same as fields included in the first part of the third PPDU.

In other words, to enable different devices to recognize high-frequency PPDUs in different formats, one or more fields in the front of the high-frequency PPDUs may be in a unified format.

For example, the second PPDU is a VHT PPDU (as shown in (a) in FIG. 3), the first part of the second PPDU includes an L-STF, an L-LTF, and an L-SIG, the first PPDU is generated by using the method 200, and the first part of the first PPDU includes an L-STF, an L-LTF, and an L-SIG. In this case, the first part of the third PPDU also includes an L-STF, an L-LTF, and an L-SIG.

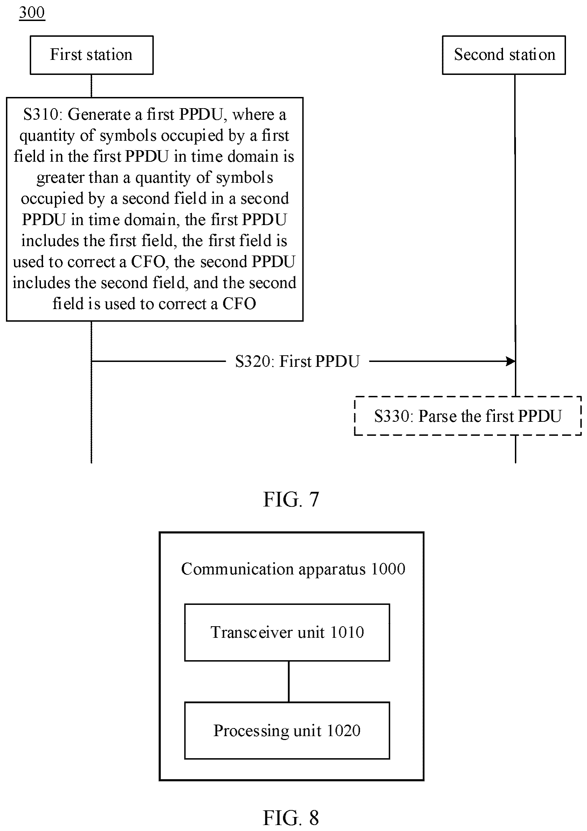

FIG. 7 is a schematic flowchart of a communication method 300 according to an embodiment of this application. The method 300 is described by using interaction between a first station and a second station as an example. The method 300 may include the following steps.

S310: The first station generates a first PPDU.

A quantity of symbols occupied by a first field in the first PPDU in time domain is greater than a quantity of symbols occupied by a second field in a second PPDU in time domain.

The first PPDU includes the first field, and the first field is used to correct a CFO. The second PPDU includes the second field, and the second field is used to correct a CFO.

The first PPDU is transmitted on a first frequency band, and the second PPDU is transmitted on a second frequency band. A lowest frequency of the first frequency band is greater than or equal to a highest frequency of the second frequency band.

S320: The first station sends the first PPDU. Correspondingly, the second station receives the first PPDU.

For example, the first field is an L-STF.

For example, the second field is an L-STF.

For example, a legacy low-frequency PPDU (an example of the second PPDU) includes 10 L-STF symbols. In this case, during high-frequency transmission, more L-STF symbols, for example, 15 or 20 L-STF symbols, may be transmitted in a high-frequency PPDU (an example of the first PPDU).

According to the foregoing solution, more symbols of the first field are transmitted in time domain, so that a receive end can have more symbols to correct a CFO, to improve offset correction accuracy.

Optionally, a subcarrier spacing between subcarriers used to send the first PPDU may be a multiple of a subcarrier spacing between subcarriers used to send the second PPDU. The multiple may be greater than 1 or equal to 1.

In an implementation, a subcarrier spacing between subcarriers used to send a first part of the first PPDU may be a multiple of a subcarrier spacing between subcarriers used to send a first part of the second PPDU. The multiple may be greater than 1 or equal to 1.

In an implementation, a subcarrier spacing between subcarriers used to send a second part of the first PPDU may be a multiple of a subcarrier spacing between subcarriers used to send a second part of the second PPDU. The multiple may be greater than 1 or equal to 1.

Optionally, the multiple that is between the subcarrier spacing between the subcarriers used to send the first part of the first PPDU and the subcarrier spacing between the subcarriers used to send the first part of the second PPDU may be the same as or different from the multiple that is between the subcarrier spacing between the subcarriers used to send the second part of the first PPDU and the subcarrier spacing between the subcarriers used to send the second part of the second PPDU.

The first PPDU includes the first part and the second part, and the first part of the first PPDU is located before the second part of the first PPDU in a frame format. The second PPDU includes the first part and the second part, and the first part of the second PPDU is located before the second part of the second PPDU in a frame format.

Optionally, the method 300 may further include the following step: S330: The second station parses the first PPDU.

For example, the second station may parse each field in the first PPDU, and obtain data carried in the first PPDU.

It should be understood that, for descriptions of the terms "first frequency band", "second frequency band", and the like, reference may be made to the method 200. Details are not described herein again.

The foregoing describes method embodiments in embodiments of this application, and the following briefly describes corresponding apparatus embodiments. It should be understood that descriptions of the apparatus embodiments correspond to the descriptions of the method embodiments. Therefore, for a part that is not described in detail, refer to the method embodiments.

FIG. 8 is a diagram of a communication apparatus according to an embodiment of this application. As shown in FIG. 8, the communication apparatus 1000 may include a transceiver unit 1010 and/or a processing unit 1020. The transceiver unit 1010 may communicate with the outside, and the processing unit 1020 is configured to process data/information. The transceiver unit 1010 may also be referred to as a communication interface or a communication unit.

In a possible implementation, the communication apparatus 1000 may be the first station in the method 200, or may be a chip configured to implement a function of the first station in the method 200. The communication apparatus 1000 may implement the process performed by the first station in the method 200. The processing unit 1020 is configured to perform a processing-related operation of the first station in the method 200, and the transceiver unit 1010 is configured to perform a sending/receiving-related operation of the first station in the method 200.

For example, the processing unit 1020 is configured to generate a first physical layer protocol data unit PPDU, where the first PPDU includes a first part and a second part, and the first part of the first PPDU is located before the second part of the first PPDU in a frame format. The transceiver unit 1010 is configured to send the first part of the first PPDU by using subcarriers at a first subcarrier spacing, and send the second part of the first PPDU by using subcarriers at a second subcarrier spacing.

The first subcarrier spacing is x times a third subcarrier spacing. The second subcarrier spacing is y times a fourth subcarrier spacing. The third subcarrier spacing is a subcarrier spacing between subcarriers for transmitting a first part of a second PPDU. The fourth subcarrier spacing is a subcarrier spacing between subcarriers for transmitting a second part of the second PPDU. The first part of the second PPDU is located before the second part of the second PPDU in a frame format. x is not equal to y, and x is not equal to 1.

The first PPDU is transmitted on a first frequency band. The second PPDU is transmitted on a second frequency band. A lowest frequency of the first frequency band is greater than or equal to a highest frequency of the second frequency band.

It should be understood that the foregoing content is merely used an example for understanding. The communication apparatus 1000 can further implement other steps, actions, or methods related to the first station in the foregoing method 200. Details are not described herein again.

In another possible implementation, the communication apparatus 1000 may implement the process performed by the second station in the method embodiment 200, and the transceiver unit 1010 is configured to perform a sending/receiving-related operation of the second station in the method embodiment 200.

Optionally, in this implementation, the communication apparatus 1000 may further include the processing unit 1020, and the processing unit 1020 is configured to perform a processing-related operation of the second station in the method embodiment 200.

For example, the transceiver unit 1010 is configured to receive a first part of a first physical layer protocol data unit PPDU by using subcarriers at a first subcarrier spacing, and receive a second part of the first PPDU by using subcarriers at a second subcarrier spacing. The processing unit 1020 is configured to parse the first PPDU.

The first subcarrier spacing is x times a third subcarrier spacing. The second subcarrier spacing is y times a fourth subcarrier spacing. The third subcarrier spacing is a subcarrier spacing between subcarriers for transmitting a first part of a second PPDU. The fourth subcarrier spacing is a subcarrier spacing between subcarriers for transmitting a second part of the second PPDU. The first part of the second PPDU is located before the second part of the second PPDU in a frame format. x is not equal to y, and x is not equal to 1.

The first PPDU is transmitted on a first frequency band. The second PPDU is transmitted on a second frequency band. A lowest frequency of the first frequency band is greater than or equal to a highest frequency of the second frequency band.

It should be understood that the foregoing content is merely used an example for understanding. The communication apparatus 1000 can further implement other steps, actions, or methods related to the second station in the foregoing method 200. Details are not described herein again.

In another possible implementation, the communication apparatus 1000 can implement steps, actions, or methods related to the first station in the foregoing method 300, or implement steps, actions, or methods related to the second station in the foregoing method 300. Details about performing the foregoing method 300 by the communication apparatus 1000 are described in the foregoing method embodiments. For brevity, details are not described herein again.

It should be understood that the communication apparatus 1000 herein is embodied in a form of a functional unit. The term "unit" herein may indicate an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The communication apparatus 1000 has a function of implementing corresponding steps performed by the first station in the foregoing methods, or the communication apparatus 1000 has a function of implementing corresponding steps performed by the second station in the foregoing methods. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform sending/receiving operations and related processing operations in the method embodiments.

In addition, the transceiver unit may alternatively be a transceiver circuit (for example, may include a receiver circuit and a transmitter circuit), and the processing unit may be a processing circuit. In embodiments of this application, the communication apparatus 1000 may be the first station or the second station in the foregoing embodiments, or may be a chip or a chip system, for example, a system-on-a-chip (system-on-a-chip, SoC). The transceiver unit may be an input/output circuit or a communication interface. The processing unit may be a processor, a microprocessor, or an integrated circuit that is integrated on the chip. This is not limited herein.

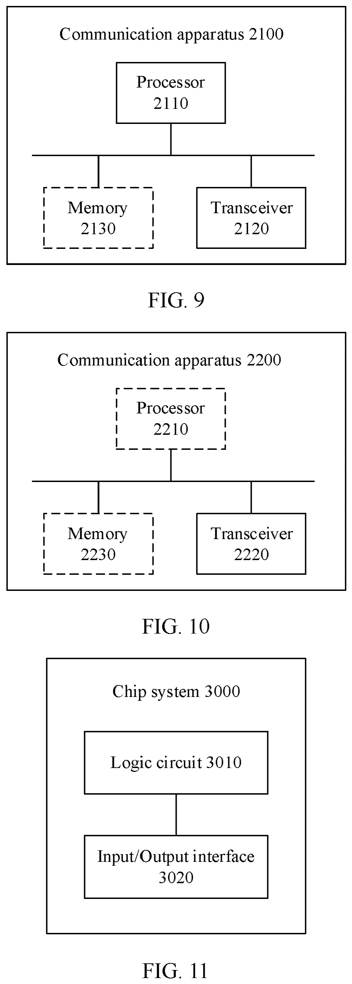

FIG. 9 is a diagram of another structure of a communication apparatus according to an embodiment of this application. As shown in FIG. 9, the communication apparatus 2100 includes at least one processor 2110 and at least one transceiver 2120. The processor 2110 is coupled to a memory, and is configured to execute instructions stored in the memory, to control the transceiver 2120 to send a signal and/or receive a signal. Optionally, the communication apparatus 2100 further includes a memory 2130, configured to store instructions.

In an example, the processor 2110 is configured to generate a first PPDU, where the first PPDU includes a first part and a second part, and the first part of the first PPDU is located before the second part of the first PPDU in a frame format. The transceiver 2120 is configured to send the first part of the first PPDU by using subcarriers at a first subcarrier spacing, and send the second part of the first PPDU by using subcarriers at a second subcarrier spacing.

The first subcarrier spacing is x times a third subcarrier spacing. The second subcarrier spacing is y times a fourth subcarrier spacing. The third subcarrier spacing is a subcarrier spacing between subcarriers for transmitting a first part of a second PPDU. The fourth subcarrier spacing is a subcarrier spacing between subcarriers for transmitting a second part of the second PPDU. The first part of the second PPDU is located before the second part of the second PPDU in a frame format. x is not equal to y, and x is not equal to 1.

The first PPDU is transmitted on a first frequency band. The second PPDU is transmitted on a second frequency band. A lowest frequency of the first frequency band is greater than or equal to a highest frequency of the second frequency band.

It should be understood that the foregoing content is merely used an example for understanding. The communication apparatus 2100 can further implement other steps, actions, or methods related to the first station in the foregoing method 200. Details are not described herein again.

In another example, the communication apparatus 2100 can implement steps, actions, or methods related to the first station in the foregoing method 300. For details about performing the foregoing method 300 by the communication apparatus 2100, refer to the foregoing method embodiments. For brevity, details are not described herein again.

FIG. 10 is a diagram of another structure of a communication apparatus according to an embodiment of this application. As shown in FIG. 10, the communication apparatus 2200 includes at least one transceiver 2220, configured to send a signal and/or receive a signal. Optionally, the communication apparatus 2200 further includes at least one processor 2210. The processor 2210 is coupled to a memory, and is configured to execute instructions stored in the memory, to control the transceiver 2220 to send a signal and/or receive a signal. Optionally, the communication apparatus 2200 further includes a memory 2230, configured to store instructions.

In an example, the transceiver 2220 is configured to receive a first part of a first physical layer protocol data unit PPDU by using subcarriers at a first subcarrier spacing, and receive a second part of the first PPDU by using subcarriers at a second subcarrier spacing. Optionally, the processor 2210 is configured to parse the first PPDU.

The first subcarrier spacing is x times a third subcarrier spacing. The second subcarrier spacing is y times a fourth subcarrier spacing. The third subcarrier spacing is a subcarrier spacing between subcarriers for transmitting a first part of a second PPDU. The fourth subcarrier spacing is a subcarrier spacing between subcarriers for transmitting a second part of the second PPDU. The first part of the first PPDU is located before the second part of the first PPDU in a frame format. The first part of the second PPDU is located before the second part of the second PPDU in a frame format. x is not equal to y, and x is not equal to 1.

The first PPDU is transmitted on a first frequency band. The second PPDU is transmitted on a second frequency band. A lowest frequency of the first frequency band is greater than or equal to a highest frequency of the second frequency band.

It should be understood that the foregoing content is merely used an example for understanding. The communication apparatus 2200 can further implement other steps, actions, or methods related to the second station in the foregoing method 200. Details are not described herein again.

In another example, the communication apparatus 2200 can implement steps, actions, or methods related to the second station in the foregoing method 300. For details about performing the foregoing method 300 by the communication apparatus 2200, refer to the foregoing method embodiments. For brevity, details are not described herein again.

It should be understood that, in the communication apparatus 2100 or the communication apparatus 2200, the processor and the memory may be combined into one processing apparatus, and the processor is configured to execute program code stored in the memory to implement the foregoing functions. During specific implementation, the memory may alternatively be integrated into the processor or independent of the processor.

It should be further understood that the transceiver 2120 or the transceiver 2220 may include a receiver (or referred to as a receiver device) and a transmitter (or referred to as a transmitter device). The transceiver 2120 or the transceiver 2220 may further include an antenna, and there may be one or more antennas. The transceiver 2120 or the transceiver 2220 may be a communication interface or an interface circuit.

The processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or transistor logic device, or a discrete hardware component, a memory (storage module) may be integrated into the processor.

It should be further noted that the memory described in this specification is intended to include but is not limited to these memories and any other appropriate type of memory.

FIG. 11 is a diagram of a chip system 3000 according to an embodiment of this application. The chip system 3000 (which may also be referred to as a processing system) includes a logic circuit 3010 and an input/output interface (input/output interface) 3020.

The logic circuit 3010 may be a processing circuit in the chip system 3000. The logic circuit 3010 invokes instructions in a storage unit, to enable the chip system 3000 to implement the methods and the functions in embodiments of this application. The input/output interface 3020 may be an input/output circuit in the chip system 3000, and outputs information processed by the logic circuit 3010, or inputs to-be-processed data or signaling information to the logic circuit 3010 for processing.

For example, the logic circuit 3010 is configured to generate a first PPDU, where the first PPDU includes a first part and a second part, and the first part of the first PPDU is located before the second part of the first PPDU in a frame format. The input/output interface 3020 is configured to send the first part of the first PPDU by using subcarriers at a first subcarrier spacing, and send the second part of the first PPDU by using subcarriers at a second subcarrier spacing.

For another example, the input/output interface 3020 is configured to receive a first part of a first physical layer protocol data unit PPDU by using subcarriers at a first subcarrier spacing, and receive a second part of the first PPDU by using subcarriers at a second subcarrier spacing. The logic circuit 3010 is configured to parse the first PPDU.

It should be understood that details about performing the foregoing methods by the input/output interface 3020 and the logic circuit 3010 are described in detail in the foregoing method embodiments. For brevity, details are not described herein again.

According to the methods provided in embodiments of this application, this application further provides a computer program product. The computer program product includes computer program code. When the computer program code is run on a computer, the computer is enabled to perform the methods in the foregoing method embodiments.

According to the methods provided in embodiments of this application, this application further provides a computer-readable medium. The computer-readable medium stores program code. When the program code is run on a computer, the computer is enabled to perform the methods in the foregoing method embodiments.

According to the methods provided in embodiments of this application, this application further provides a system, including the foregoing first station and/or second station.

The term "at least one of ..." in this specification indicates all or any combination of the listed items. For example, "at least one of A, B, and C" may indicate the following six cases: Only A exists, only B exists, only C exists, both A and B exist, both B and C exist, and all of A, B, and C exist. In this specification, "at least one" indicates one or more, and "a plurality of" indicates two or more.

The term "and/or" in this specification describes only an association relationship between associated objects, and indicates that three relationships may exist. For example, A and/or B may indicate the following three cases: Only A exists, both A and B exist, and only B exists. In addition, the character "/" in this specification usually indicates an "or" relationship between the associated objects.

It should be understood that, in embodiments of this application, "B corresponding to A" indicates that B is associated with A, and B may be determined based on A. However, it should be further understood that determining B based on A does not mean that B is determined only based on A, and B may alternatively be determined based on A and/or other information. The terms "include", "comprise", "have", and their variants all mean "including but not limited to", unless otherwise specifically emphasized in another manner.

It should be understood that, in various embodiments of this application, first, second, and various numbers are merely intended for differentiation for ease of description, but not to limit the scope of embodiments of this application. For example, the terms are intended to distinguish between different information.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application. However, it should not be considered that the implementation goes beyond the scope of this application.

It can be clearly understood by a person skilled in the art that, for ease and brevity of description, for detailed working processes of the foregoing systems, apparatuses, and units, reference may be made to corresponding processes in the foregoing method embodiments. Details are not described herein again.

In several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   generating a first physical layer protocol data unit PPDU, wherein the first PPDU comprises a first part and a second part, and the first part of the first PPDU is located before the second part of the first PPDU in a frame format; and

**EP 4 675 964 A1**

sending the first part of the first PPDU by using subcarriers at a first subcarrier spacing, and sending the second part of the first PPDU by using subcarriers at a second subcarrier spacing, wherein the first subcarrier spacing is x times a third subcarrier spacing, the second subcarrier spacing is y times a fourth subcarrier spacing, the third subcarrier spacing is a subcarrier spacing between subcarriers for transmitting a first part of a second PPDU, the fourth subcarrier spacing is a subcarrier spacing between subcarriers for transmitting a second part of the second PPDU, the first part of the second PPDU is located before the second part of the second PPDU in a frame format, x is not equal to y, and x is not equal to 1, wherein
the first PPDU is transmitted on a first frequency band, the second PPDU is transmitted on a second frequency band, and a lowest frequency of the first frequency band is greater than or equal to a highest frequency of the second frequency band.

2. A communication method, comprising:

receiving a first part of a first physical layer protocol data unit PPDU by using subcarriers at a first subcarrier spacing, and receiving a second part of the first PPDU by using subcarriers at a second subcarrier spacing, wherein the first part of the first PPDU is located before the second part of the first PPDU in a frame format, the first subcarrier spacing is x times a third subcarrier spacing, the second subcarrier spacing is y times a fourth subcarrier spacing, the third subcarrier spacing is a subcarrier spacing between subcarriers for transmitting a first part of a second PPDU, the fourth subcarrier spacing is a subcarrier spacing between subcarriers for transmitting a second part of the second PPDU, the first part of the second PPDU is located before the second part of the second PPDU in a frame format, x is not equal to y, and x is not equal to 1; and
parsing the first PPDU, wherein
the first PPDU is transmitted on a first frequency band, the second PPDU is transmitted on a second frequency band, and a lowest frequency of the first frequency band is greater than or equal to a highest frequency of the second frequency band.

3. The method according to claim 1 or 2, wherein the first part of the first PPDU is repeatedly sent in a basic channel element of the first frequency band.

4. The method according to claim 3, wherein that the first part of the first PPDU is repeatedly sent in the basic channel element of the first frequency band comprises:
a first part, multiplied by a coefficient, of the first PPDU is sent in the basic channel element.

5. The method according to claim 1 or 2, wherein a frequency domain width of the second part of the first PPDU is supplemented to be the same as a frequency domain width of the first part of the first PPDU.

6. The method according to any one of claims 1 to 5, wherein the first part of the second PPDU is used to correct a carrier frequency offset.

7. The method according to any one of claims 1 to 6, wherein the first part of the first PPDU is used to correct a carrier frequency offset.

8. The method according to claim 6 or 7, wherein the first part of the first PPDU comprises a legacy-short training field, and the legacy-short training field is used to correct the carrier frequency offset.

9. The method according to claim 8, wherein a quantity of symbols occupied by the legacy-short training field in the first PPDU in time domain is greater than a quantity of symbols occupied by a legacy-short training field in the second PPDU in time domain.

10. The method according to claim 6 or 7, wherein the first part of the first PPDU comprises a new field, and the new field is used to correct the carrier frequency offset.

11. The method according to claim 10, wherein the second part of the first PPDU comprises a legacy-short training field.

12. The method according to claim 11, wherein a quantity of symbols occupied by the legacy-short training field in the first PPDU in time domain is less than or equal to a quantity of symbols occupied by a legacy-short training field in the second PPDU in time domain.

24

13. The method according to any one of claims 10 to 12, wherein a frequency domain sequence of the new field is different from a frequency domain sequence of the legacy-short training field in the second PPDU.

14. The method according to any one of claims 1 to 13, wherein the second part of the first PPDU comprises a data field.

15. The method according to any one of claims 1 to 14, wherein the second part of the second PPDU comprises a data field.

16. The method according to any one of claims 1 to 15, wherein the lowest frequency of the first frequency band is greater than or equal to 45 GHz.

17. The method according to any one of claims 1 to 16, wherein the highest frequency of the second frequency band is less than or equal to 7 GHz.

18. The method according to any one of claims 1 to 17, wherein x meets the following condition:

$$x \geq \frac{4 * f_a * e}{\Delta f},$$

wherein
$f_a$ is a highest frequency of the first frequency band, $e$ is a maximum error allowed for a device operating on the first frequency band, and $\Delta f$ is the third subcarrier spacing.

19. The method according to any one of claims 1 to 18, wherein the second PPDU is any one of the following:
a very high throughput VHT protocol PPDU, a high efficiency HE protocol PPDU, and an extremely high throughput EHT protocol PPDU.

20. A communication apparatus, comprising a unit or a module for performing the method according to any one of claim 1 or claims 3 to 19.

21. A communication apparatus, comprising a unit or a module for performing the method according to any one of claims 2 to 19.

22. A communication apparatus, comprising a processor, wherein the processor is configured to execute a computer program or instructions stored in a memory, to enable the communication apparatus to perform the method according to any one of claim 1 or claims 3 to 19.

23. A communication apparatus, comprising a processor, wherein the processor is configured to execute a computer program or instructions stored in a memory, to enable the communication apparatus to perform the method according to any one of claims 2 to 19.

24. A computer-readable storage medium, wherein the computer-readable storage medium stores a computer program or instructions, and when the computer program or instructions is/are run on a communication apparatus, the communication apparatus is enabled to perform the method according to any one of claim 1 or claims 3 to 19, or perform the method according to any one of claims 2 to 19.

25. A computer program product, wherein the computer program product comprises a computer program or instructions for performing the method according to any one of claim 1 or claims 3 to 19, or comprises a computer program or instructions for performing the method according to any one of claims 2 to 19.

FIG. 1

FIG. 2

(a)

| L-STF (Legacy-short training field) | L-LTF (Legacy-long training field) | L-SIG (Legacy-signal field) | VHT-SIG-A (VHT-signal A field) | VHT-STF (VHT-short training field) | VHT-LTF (VHT-long training field) | VHT-SIG-B (VHT-signal B field) | Data (Data field) |
|---|---|---|---|---|---|---|---|

(b)

| L-STF (Legacy-short training field) | L-LTF (Legacy-long training field) | L-SIG (Legacy-signal field) | RL-SIG (Repeated legacy-signal field) | HE-SIG-A (HE-signal A field) | HE-STF (HE-short training field) | HE-LTF (HE-long training field) | Data (Data field) | PE (Packet extension field) |
|---|---|---|---|---|---|---|---|---|

(c)

| L-STF (Legacy-short training field) | L-LTF (Legacy-long training field) | L-SIG (Legacy-signal field) | RL-SIG (Repeated legacy-signal field) | U-SIG (Universal-signal field) | EHT-STF (EHT-short training field) | EHT-LTF (EHT-long training field) | Data (Data field) | PE (Packet extension field) |
|---|---|---|---|---|---|---|---|---|

FIG. 3

200

```
┌─────────────────────┐                              ┌─────────────────────┐
│    First station    │                              │   Second station    │
└─────────────────────┘                              └─────────────────────┘
           │                                                      │
┌──────────────────────────────────────────┐                     │
│ S210: Generate a first PPDU, where the first│                   │
│ PPDU includes a first part and a second part│                   │
└──────────────────────────────────────────┘                     │
           │                                                      │
```

S220: Send the first part of the first PPDU by using
subcarriers at a first subcarrier spacing, and send the
second part of the first PPDU by using subcarriers at a
second subcarrier spacing, where the first subcarrier
spacing is x times a third subcarrier spacing, the second
subcarrier spacing is y times a fourth subcarrier spacing,
x is not equal to y, and x is not equal to 1

S230: Parse the first PPDU

FIG. 4

FIG. 5

| L-STF | L-LTF | L-SIG | VHT-SIG-A | VHT-STF | VHT-LTF | VHT-SIG-B | Data field |
|-------|-------|-------|-----------|---------|---------|-----------|------------|

← First part (a) → ← ———————— Second part (a) ———————— →

PPDU#2

| 160 MHz | New field | L-STF | L-LTF | L-SIG | VHT-SIG-A | VHT-STF | VHT-LTF | VHT-SIG-B | Data field |
|---------|-----------|-------|-------|-------|-----------|---------|---------|-----------|------------|
| 160 MHz | New field | | | | | | | | |

← First part (8a) → ← ———————— Second part (16a) ———————— →

PPDU#4

| 160 MHz | New field | L-STF | L-LTF | L-SIG | VHT-SIG-A | VHT-STF | VHT-LTF | VHT-SIG-B | Data field |
|---------|-----------|-------|-------|-------|-----------|---------|---------|-----------|------------|
| 160 MHz | | L-STF | L-LTF | L-SIG | VHT-SIG-A | VHT-STF | VHT-LTF | VHT-SIG-B | Data field |

← First part (16a) → ← ———————— Second part (8a) ———————— →

PPDU#5

Frequency domain

↑ Time domain →

FIG. 6

300

```
┌─────────────────┐                              ┌─────────────────┐
│  First station  │                              │ Second station  │
└────────┬────────┘                              └────────┬────────┘
         │                                                │
┌────────┴─────────────────────────┐                      │
│ S310: Generate a first PPDU, where a                    │
│ quantity of symbols occupied by a first                 │
│ field in the first PPDU in time domain is               │
│ greater than a quantity of symbols                      │
│ occupied by a second field in a second                  │
│ PPDU in time domain, the first PPDU                     │
│ includes the first field, the first field is            │
│ used to correct a CFO, the second PPDU                  │
│ includes the second field, and the second               │
│ field is used to correct a CFO          │               │
└────────┬─────────────────────────┘                      │
         │                                                │
         ├─────────── S320: First PPDU ──────────────────►│
         │                                                │
         │                              ┌ ─ ─ ─ ─ ─ ─ ─ ─ ┼ ─ ─ ┐
         │                                S330: Parse the first PPDU
         │                              └ ─ ─ ─ ─ ─ ─ ─ ─ ┼ ─ ─ ┘
         │                                                │
```

FIG. 7

```
┌─────────────────────────────────────────┐
│  Communication apparatus 1000            │
│                                          │
│   ┌──────────────────────────────┐       │
│   │   Transceiver unit 1010       │      │
│   └───────────────┬──────────────┘       │
│                   │                      │
│   ┌───────────────┴──────────────┐       │
│   │   Processing unit 1020        │      │
│   └──────────────────────────────┘       │
│                                          │
└─────────────────────────────────────────┘
```

FIG. 8

Communication apparatus 2100

Processor
2110

Memory
2130

Transceiver
2120

FIG. 9

Communication apparatus 2200

Processor
2210

Memory
2230

Transceiver
2220

FIG. 10

Chip system 3000

Logic circuit 3010

Input/Output interface
3020

FIG. 11

## INTERNATIONAL SEARCH REPORT

| International application No. |
|---|
| **PCT/CN2024/081426** |

**A.    CLASSIFICATION OF SUBJECT MATTER**

H04L 5/00(2006.01)i

According to International Patent Classification (IPC) or to both national classification and IPC

**B.    FIELDS SEARCHED**

Minimum documentation searched (classification system followed by classification symbols)

IPC:H04L H04W H04Q

Documentation searched other than minimum documentation to the extent that such documents are included in the fields searched

Electronic data base consulted during the international search (name of data base and, where practicable, search terms used)

3GPP, CNTXT, ENTXT, DWPI, CNKI: 低频, 高频, PPDU, 第一, first, 第二, second, 字段, field, 部分, section, 子载波间隔, SCS, 倍, 比例, EHT, VHT, HE, 78.125KHz

**C.    DOCUMENTS CONSIDERED TO BE RELEVANT**

| Category* | Citation of document, with indication, where appropriate, of the relevant passages | Relevant to claim No. |
|---|---|---|
| A | US 2022045812 A1 (LG ELECTRONICS, INC.) 10 February 2022 (2022-02-10) description, paragraphs 136-139 | 1-25 |
| A | CN 115623599 A (HUAWEI TECHNOLOGIES CO., LTD.) 17 January 2023 (2023-01-17) entire document | 1-25 |
| A | US 2022353125 A1 (LG ELECTRONICS, INC.) 03 November 2022 (2022-11-03) entire document | 1-25 |
| A | ASUSTEK. "Remaining Issues on Support of Unaligned Frame Boundary with Slot Alignment" *3GPP TSG RAN WG1 #100bis, R1-2002475,* 30 April 2020 (2020-04-30), entire document | 1-25 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 May 2024** | **20 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/081426** |

| Patent document cited in search report | | | Publication date (day/month/year) | Patent family member(s) | | | Publication date (day/month/year) |
| --- | --- | --- | --- | --- | --- | --- | --- |
| US | 2022045812 | A1 | 10 February 2022 | WO | 2020071726 | A1 | 09 April 2020 |
| CN | 115623599 | A | 17 January 2023 | WO | 2023284548 | A1 | 19 January 2023 |
| US | 2022353125 | A1 | 03 November 2022 | WO | 2021045421 | A1 | 11 March 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310286630